(19) Europäisches Patentamt

European Patent Office

Office européen des brevets

(11) **EP 4 516 746 A2**

(12) **EUROPEAN PATENT APPLICATION**

(43) Date of publication:
05.03.2025 Bulletin 2025/10

(21) Application number: 25151234.9

(22) Date of filing: 18.08.2020

(51) International Patent Classification (IPC):
*C01G 53/00* (2025.01)

(52) Cooperative Patent Classification (CPC):
**H01M 4/131; C01G 53/50; H01M 4/1391;**
**H01M 4/505; H01M 4/525; H01M 10/0525;**
C01P 2002/54; C01P 2002/76; C01P 2002/88;
C01P 2004/32; C01P 2004/61; C01P 2006/10;
C01P 2006/11; C01P 2006/12; H01M 2004/021;
(Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: 02.09.2019 CN 201910824291

(62) Document number(s) of the earlier application(s) in
accordance with Art. 76 EPC:
**20860222.7 / 3 944 378**

(71) Applicant: **Contemporary Amperex Technology**
**(Hong Kong) Limited**
**Central, Central And Western District (HK)**

(72) Inventors:
• **DOU, Shushi**
**Ningde City, Fujian 352100 (CN)**
• **HU, Chunhua**
**Ningde City, Fujian 352100 (CN)**

• **JIANG, Yao**
**Ningde City, Fujian 352100 (CN)**
• **WU, Qi**
**Ningde City, Fujian 352100 (CN)**
• **HE, Jinhua**
**Ningde City, Fujian 352100 (CN)**
• **DENG, Bin**
**Ningde City, Fujian 352100 (CN)**

(74) Representative: **Kraus & Lederer PartGmbB**
**Thomas-Wimmer-Ring 15**
**80539 München (DE)**

Remarks:
This application was filed on 10.01.2025 as a
divisional application to the application mentioned
under INID code 62.

(54) **POSITIVE ELECTRODE ACTIVE MATERIAL AND PREPARATION METHOD THEREFOR, POSITIVE ELECTRODE PLATE, LITHIUM ION SECONDARY BATTERY AND BATTERY MODULE COMPRISING LITHIUM ION SECONDARY BATTERY, BATTERY PACK, AND APPARATUS**

(57) A positive electrode active material and a preparation method thereof, a positive electrode plate, a lithium-ion secondary battery (5), and a battery module (4), battery pack (1), and apparatus containing such lithium-ion secondary battery (5) are disclosed. The positive electrode active material includes a lithium nickel cobalt manganese oxide. In the lithium nickel cobalt manganese oxide, the number of moles of nickel accounts for 50% to 95% of the total number of moles of nickel, cobalt, and manganese. The lithium nickel cobalt manganese oxide has a layered crystal structure with a space group $R\bar{3}m$. The lithium nickel cobalt manganese oxide includes a doping element. When the positive electrode active material is in a 78% delithiated state, the doping element has two or more different valence states, and the amount of doping element in a highest valence state accounts for 40% to 90% of the total amount of doping element.

FIG. 4

**(Cont. next page)**

(52)  Cooperative Patent Classification (CPC): (Cont.)
       Y02E 60/10

**Description**

**CROSS-REFERENCE TO RELATED APPLICATIONS**

This application claims priority to Chinese Patent Application No. 201910824291.9, filed on September 2, 2019 and entitled "POSITIVE ELECTRODE ACTIVE MATERIAL, POSITIVE ELECTRODE PLATE, AND LITHIUM-ION SECONDARY BATTERY", which is incorporated herein by reference in its entirety.

TECHNICAL FIELD

This application relates to the field of secondary battery technologies, and in particular, to a positive electrode active material and a preparation method thereof, a positive electrode plate, a lithium-ion secondary battery, and a battery module, battery pack, and apparatus containing such lithium-ion secondary battery.

**BACKGROUND**

Lithium-ion secondary batteries are rechargeable batteries that operate mainly depending on migration of lithium ions between a positive electrode and a negative electrode. They are a form of clean energy that is widely used currently. As an important part of a lithium-ion secondary battery, a positive electrode active material provides the lithium ions that move back and forth between the positive and negative electrodes in a battery charge/discharge process. Therefore, the positive electrode active material is of great importance to battery performance.

Lithium nickel cobalt manganese oxides have high theoretical capacity, and a lithium-ion secondary battery using a lithium nickel cobalt manganese oxide as a positive electrode active material is expected to obtain high energy density. However, how to make such lithium-ion secondary battery have both high energy density and good high-temperature cycling performance has become a technical issue that urgently needs to be resolved.

**SUMMARY**

A first aspect of this application provides a positive electrode active material. The positive electrode active material includes a lithium nickel cobalt manganese oxide. In the lithium nickel cobalt manganese oxide, the number of moles of nickel accounts for 50% to 95% of the total number of moles of nickel, cobalt, and manganese. The lithium nickel cobalt manganese oxide has a layered crystal structure with a space group $R\bar{3}m$. The lithium nickel cobalt manganese oxide includes a doping element. When the positive electrode active material is in a 78% delithiated state, the doping element has two or more different valence states, and the amount of doping element in a highest valence state accounts for 40% to 90% of the total amount of doping element.

In the positive electrode active material provided in this application, the lithium nickel cobalt manganese oxide with high nickel content has a relatively high specific capacity, so that a lithium-ion secondary battery can have relatively high capacity performance and energy density. The lithium nickel cobalt manganese oxide is further doped with a polyvalent element (that is, an element that may have two or more different valence states). In addition, in the positive electrode active material in the 78% delithiated state, the percentage of the amount of doping element in the highest valence state in the total amount of doping element is properly controlled, so that the positive electrode active material can be driven to release more lithium ions, and structural stability and high-temperature cycle stability of the positive electrode active material can be significantly improved. Therefore, with the positive electrode active material of this application, capacity performance and energy density of the lithium-ion secondary battery can be further improved, and high-temperature cycling performance of the lithium-ion secondary battery is improved.

In some embodiments, when the positive electrode active material is in the 78% delithiated state, the amount of doping element in the highest valence state accounts for 50% to 90%, optionally, 60% to 80%, of the total amount of doping element. When the positive electrode active material satisfies the foregoing condition, the energy density and the high-temperature cycling performance of the battery can be further improved.

In any one of the foregoing embodiments, when the positive electrode active material is in the 78% delithiated state, one part of the doping element has one or more valences of +2, +3, and +4, and the other part of the doping element has one or more valences of +4, +5, +6, +7, and +8. The doping element can contribute more electrons to the positive electrode active material, and can strengthen binding with oxygen atoms. With the positive electrode active material, the energy density and the high-temperature cycling performance of the battery can be improved.

In any one of the foregoing embodiments, the doping element includes one or more polyvalent elements of Ti, V, Cr, Se, Nb, Mo, Ru, Rh, Pd, Sb, Te, Ce, and W. Optionally, the doping element may include one or more of Se, Nb, Mo, Ru, Rh, Sb, Te, Ce, and W. Optionally, the doping element may include one or more of Se, Nb, Mo, Sb, and W. The doping element can better provide a charge compensation effect and stabilize a structure of the positive electrode active material,

**EP 4 516 746 A2**

thereby further improving the energy density and the high-temperature cycling performance of the battery.

In any one of the foregoing embodiments, a relative deviation of a local mass concentration of the doping element in a particle of the positive electrode active material is 20% or below. Distribution uniformity of the doping element in the particle is relatively high, so that structural stability of all locations in the particle can be improved, and the positive electrode active material can also have relatively high lithium ion transport performance, thereby further improving the energy density and the high-temperature cycling performance of the battery.

In any one of the foregoing embodiments, a true doping concentration $\omega$ of the positive electrode active material satisfies $2300\ \mu g/cm^3 \leq \omega \leq 50000\ \mu g/cm^3$, optionally, $3000\ \mu g/cm^3 \leq \omega \leq 40000\ \mu g/cm^3$, or optionally, $14810\ \mu g/cm^3 \leq \omega \leq 36720\ \mu g/cm^3$. The true doping concentration of the positive electrode active material is within an appropriate range, thereby helping ensure that the amount of doping element in the highest valence state accounts for 40% to 90% of the total amount of doping element in the positive electrode active material in the "78% delithiated state". In addition, the doping element can contribute more electrons to the positive electrode active material, and better stabilize the structure of the positive electrode active material, thereby further improving the energy density and the high-temperature cycling performance of the battery.

In any one of the foregoing embodiments, a deviation $\varepsilon$ of a mass concentration of the doping element in the positive electrode active material relative to an average mass concentration of the doping element in a particle of the positive electrode active material is 30% or below, optionally, 20% or below. When $\varepsilon$ of the positive electrode active material is within the foregoing range, macroscopic and microscopic consistency of the positive electrode active material is relatively good, and particle stability is high, thereby helping the positive electrode active material achieve higher capacity performance and normal-temperature and high-temperature cycling performance.

In any one of the foregoing embodiments, in differential scanning calorimetry analysis with the positive electrode active material in the 78% delithiated state, an onset exothermic temperature of a main exothermic peak is 200°C or above, and an integral area of the main exothermic peak is 100 J/g or below. Optionally, a peak width at half height of the main exothermic peak is 30°C or below. Optionally, a maximum exothermic temperature of the main exothermic peak is 230°C or above. When the positive electrode active material satisfies the foregoing condition, the positive electrode active material can have higher structural stability, thereby further improving the high-temperature cycling performance of the battery. Further, the battery can achieve higher energy density.

In any one of the foregoing embodiments, true density $\rho_{true}$ of the positive electrode active material satisfies $4.6\ g/cm^3 \leq \rho_{true} \leq 4.9\ g/cm^3$. The positive electrode active material has a relatively high specific capacity, so that the energy density of the battery can be improved.

In any one of the foregoing embodiments, a volume average particle size $D_v50$ of the positive electrode active material is 5 $\mu m$ to 20 $\mu m$, optionally, 8 $\mu m$ to 15 $\mu m$, and further optionally, 9 $\mu m$ to 11 $\mu m$. When $D_v50$ of the positive electrode active material is within the foregoing range, cycling performance and rate performance of the lithium-ion secondary battery can be improved, and the energy density of the battery can also be improved.

In any one of the foregoing embodiments, a specific surface area of the positive electrode active material is 0.2 $m^2/g$ to 1.5 $m^2/g$, optionally, 0.3 $m^2/g$ to 1 $m^2/g$. When the specific surface area of the positive electrode active material is within the foregoing range, the battery can achieve relatively high energy density and cycling performance.

In any one of the foregoing embodiments, tap density of the positive electrode active material is 2.3 $g/cm^3$ to 2.8 $g/cm^3$. When the tap density of the positive electrode active material is within the foregoing range, the lithium-ion secondary battery can have relatively high energy density.

In any one of the foregoing embodiments, compacted density of the positive electrode active material under a pressure of 5 tons (equivalent to 49 kN) is 3.1 $g/cm^3$ to 3.8 $g/cm^3$. When the compacted density of the positive electrode active material is within the given range, the lithium-ion secondary battery can achieve relatively high energy density, and can also achieve relatively high cycling performance.

In any one of the foregoing embodiments, the lithium nickel cobalt manganese oxide may satisfy a chemical formula $Li_{1+a}[Ni_xCo_yMn_zM^1{}_b]O_{2-p}X_p$, where $M^1$ is the doping element, $M^1$ is selected from one or more polyvalent elements of Ti, V, Cr, Se, Nb, Mo, Ru, Rh, Pd, Sb, Te, Ce and W, X is selected from one or more of F, N, P and S, $0.7 \leq x \leq 0.9$, $0 < y < 0.3$, $0 < z < 0.3$, $-0.1 \leq a < 0.2$, $0 < b < 0.3$, $x + y + z + b = 1$, and $0 \leq p < 0.2$. Alternatively, the lithium nickel cobalt manganese oxide may satisfy a chemical formula $Li_{1+c}[Ni_{r-d}Co_sMn_tM^2{}_d]O_{2-q}X'{}_q$, where $M^2$ is the doping element, $M^2$ is selected from one or more polyvalent elements of Ti, V, Cr, Se, Nb, Mo, Ru, Rh, Pd, Sb, Te, Ce and W, X' is selected from one or more of F, N, P and S, $0.7 \leq r - d \leq 0.9$, $0 < s < 0.3$, $0 < t < 0.3$, $-0.1 \leq c < 0.2$, $0 < d < 0.3$, $r + s + t = 1$, and $0 \leq q < 0.2$.

A second aspect of this application provides a method for preparing positive electrode active material. The method includes the following steps: mixing a positive electrode active material precursor, a lithium source, and a doping element precursor to obtain a mixture, where the positive electrode active material precursor is selected from one or more of an oxide, hydroxide, or carbonate that contains Ni, Co, and Mn, the number of moles of nickel accounts for 50% to 95% of the total number of moles of nickel, cobalt, and manganese, and at least part of the doping element in the doping element precursor has not reached a highest valence state; and sintering the mixture in an oxygen-containing atmosphere at a temperature of 600°C to 1000°C to obtain a positive electrode active material, where the positive electrode active material includes a lithium nickel cobalt manganese oxide, in the lithium nickel cobalt manganese oxide, the number of moles of nickel accounts for 50% to 95% of the total number of moles of nickel, cobalt, and manganese, and the lithium nickel cobalt manganese oxide has a layered crystal structure with a space group $R\overline{3}m$; and the lithium nickel cobalt manganese oxide includes a doping element, and when the positive electrode active material is in a 78% delithiated state, the doping element has two or more different valence states, and the amount of doping element in a highest valence state accounts for 40% to 90% of the total amount of doping element.

The positive electrode active material obtained by using the preparation method provided in this application contains the lithium nickel cobalt manganese oxide with high nickel content. The lithium nickel cobalt manganese oxide is further doped with a polyvalent element. In addition, in the positive electrode active material in the 78% delithiated state, the percentage of the amount of doping element in the highest valence state in the total amount of doping element is properly controlled, so that the positive electrode active material can be driven to release more lithium ions, structural stability and high-temperature cycle stability of the positive electrode active material can be significantly improved, and a lithium-ion secondary battery can achieve relatively high energy density and high-temperature cycling performance.

In any one of the foregoing embodiments, the doping element precursor is selected from one or more of a titanium oxide, a vanadium oxide, a chromium oxide, a selenium oxide, a niobium oxide, a molybdenum oxide, a ruthenium oxide, a rhodium oxide, a palladium oxide, an antimony oxide, a tellurium oxide, a cerium oxide, and a tungsten oxide. Optionally, the doping element precursor is selected from one or more of $TiO_2$, $TiO$, $V_2O_5$, $V_2O_4$, $V_2O_3$, $CrO_3$, $Cr_2O_3$, $SeO_2$, $Nb_2O_5$, $NbO_2$, $MoO_2$, $MoOs$, $RuO_2$, $Rh_2O_3$, $PdO$, $Sb_2O_5$, $Sb_2O_3$, $TeO_2$, $CeO_2$, $WO_2$, and $WO_3$.

In any one of the foregoing embodiments, the doping element precursor includes a first doping element oxide and a second doping element oxide, a valence $\alpha$ of a doping element in the first doping element oxide is less than or equal to 4, and a valence $\beta$ of a doping element in the second doping element oxide is greater than or equal to 4; and optionally, $\beta > \alpha$.

In any one of the foregoing embodiments, an oxygen concentration of a sintering atmosphere may be 70% to 100%, optionally, 75% to 95%.

In any one of the foregoing embodiments, a sintering temperature may be 700°C to 900°C.

In any one of the foregoing embodiments, sintering duration is 5 h to 25 h, optionally, 10 h to 20 h.

A third aspect of this application provides a positive electrode plate. The positive electrode plate includes a positive electrode current collector and a positive electrode active material layer disposed on the positive electrode current collector. The positive electrode active material layer includes the positive electrode active material in the first aspect of this application, or the positive electrode active material obtained by using the preparation method in the second aspect of this application.

Because the positive electrode plate of this application includes the positive electrode active material, a lithium-ion secondary battery in which the positive electrode plate is used can have relatively high energy density and high-temperature cycling performance.

A fourth aspect of this application provides a lithium-ion secondary battery. The lithium-ion secondary battery includes the positive electrode plate in the third aspect of this application.

The lithium-ion secondary battery of this application includes the positive electrode plate, and therefore can have relatively high energy density and high-temperature cycling performance.

A fifth aspect of this application provides a battery module. The battery module includes the lithium-ion secondary battery in the fourth aspect of this application.

A sixth aspect of this application provides a battery pack. The battery pack includes the lithium-ion secondary battery in the fourth aspect of this application, or the battery module in the fifth aspect of this application.

A seventh aspect of this application provides an apparatus. The apparatus includes at least one of the lithium-ion secondary battery in the fourth aspect of this application, the battery module in the fifth aspect of this application, or the battery pack in the sixth aspect of this application.

The battery module, the battery pack, and the apparatus of this application include the lithium-ion secondary battery of this application, and therefore have at least an effect the same as or similar to that of the lithium-ion secondary battery.

**BRIEF DESCRIPTION OF DRAWINGS**

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.

FIG. 1 is an exothermic curve spectrogram of a positive electrode active material measured by using differential scanning calorimetry (Differential Scanning Calorimeter, DSC), DSC spectrogram for short, according to an embodiment of this application;

FIG. 2 is a doping element distribution image obtained through energy dispersive spectroscopy (Energy Dispersive Spectroscopy, EDS) on a cross section, of a positive electrode active material, prepared by using a cross section polisher (Cross Section Polisher, CP) according to Example 1, where bright dots indicate doping element, and the doping element is uniformly distributed in particles;

FIG. 3 is a schematic diagram of sampling locations of a relative deviation test for a local mass concentration of a doping element in a particle of a positive electrode active material according to Examples 1 to 27 and Comparative Examples 1 to 9;

FIG. 4 is a schematic diagram of an embodiment of a lithium-ion secondary battery;

FIG. 5 is an exploded view of FIG. 4;

FIG. 6 is a schematic diagram of an embodiment of a battery module;

FIG. 7 is a schematic diagram of an embodiment of a battery pack;

FIG. 8 is an exploded view of FIG. 7; and

FIG. 9 is a schematic diagram of an embodiment of an apparatus using a lithium-ion secondary battery as a power source.

## DESCRIPTION OF EMBODIMENTS

To make the invention objectives, technical solutions, and beneficial technical effects of this application clearer, the following further describes this application in detail with reference to embodiments. It should be understood that the embodiments described in this specification are merely intended to explain this application, but not to limit this application.

For simplicity, only some numerical ranges are explicitly disclosed in this specification. However, any lower limit may be combined with any upper limit to form an unspecified range, any lower limit may be combined with another lower limit to form an unspecified range, and similarly, any upper limit may be combined with any other upper limit to form an unspecified range. In addition, although not explicitly stated, each point or a single numerical value between end points of a range is included in the range. Therefore, each point or a single numerical value may serve as its own lower limit or upper limit and be combined with any other point or single numerical value or another lower limit or upper limit to form an unspecified range.

In the descriptions of this specification, it should be noted that "above" and "below" include the number itself, "more types" in "one or more types" means at least two types, and "more" in "one or more" means at least two, unless otherwise specified.

In the descriptions of this application, the term "or (or)" is inclusive, unless otherwise specified. For example, the phrase "A or (or) B" means "A, B, or both A and B". More specifically, all the following conditions fall within the condition "A or B": A is true (or present), and B is false (or not present); A is false (or not present), and B is true (or not present); or both A and B are true (or present).

The foregoing summary of this application is not intended to describe each disclosed embodiment or each implementation of this application. The following descriptions illustrate example embodiments more specifically by using example. In many places throughout this application, guidance is provided through a series of embodiments. These embodiments may be used in various combinations. In each embodiment, enumeration is only representative but should not be interpreted as exhaustive.

## Positive electrode active material

This application provides a positive electrode active material. The positive electrode active material includes a lithium nickel cobalt manganese oxide. In the lithium nickel cobalt manganese oxide, the number of moles of nickel accounts for 50% to 95% of the total number of moles of nickel, cobalt, and manganese. The lithium nickel cobalt manganese oxide has a layered crystal structure with a space group $R\bar{3}m$. The lithium nickel cobalt manganese oxide includes a doping element. When the positive electrode active material is in a 78% delithiated state, the doping element has two or more different valence states, and the amount of doping element in a highest valence state accounts for 40% to 90% of the total amount of doping element.

In this embodiment of this application, the positive electrode active material includes the lithium nickel cobalt manganese oxide, and the number of moles of nickel accounts for 50% to 90% of the total number of moles of nickel, cobalt, and manganese. The lithium nickel cobalt manganese oxide with a high nickel content is characterized by a relatively high specific capacity, allowing the battery to present relatively high capacity performance and energy density.

The positive electrode active material is doped with a polyvalent element. When the positive electrode active material is in a 78% delithiated state, the doping element has two or more different valence states, and the amount of doping element in a highest valence state accounts for 40% to 90% of the total amount of doping element. The percentage herein is a mass percentage.

The inventor finds that, compared with a positive electrode active material doped with a non-polyvalent element in a cycling process, the doping element can contribute more electrons to the positive electrode active material, thereby enabling the positive electrode active material to release more lithium ions, and further improving capacity performance and energy density of the battery. In addition, a doping element in a higher valence state can be bonded to an oxygen atom more strongly. To be specific, bond energy for combining with the oxygen atom is higher, and the oxygen atom can be effectively bound, thereby preventing the positive electrode active material from releasing oxygen in a heating and high-temperature cycling process after delithiation, and suppressing an irreversible structural phase change. Therefore, structural stability and high-temperature cycle stability of the positive electrode active material are greatly improved, so that high-temperature cycling performance of a lithium-ion secondary battery can be improved.

The inventor further finds that, when the amount of doping element in the highest valence state accounts for 40% to 90% of the total amount of doping element in the positive electrode active material in the "78% delithiated state", the doping element can prevent a component segregation phenomenon in the positive electrode active material while effectively improving a specific capacity and structural stability of the positive electrode active material. Therefore the positive electrode active material can maintain relatively high lithium ion transport performance, and the battery can have relatively high energy density and cycling performance. In addition, internal stress of the positive electrode active material is distributed uniformly, thereby further improving structural stability and high-temperature cycle stability of the positive electrode active material, and effectively improving high-temperature cycling performance of the battery.

In some embodiments, in the positive electrode active material in the "78% delithiated state", the amount of doping element in the highest valence state accounts for 50% to 90%, optionally, 60% to 90%, 60% to 85%, 60% to 80%, or 65% to 75%, of the total amount of doping element.

In this specification, the "78% delithiated state" is a state in which the number of moles of lithium released from the positive electrode active material accounts for 78% of a theoretical amount of lithium in a battery charge process. In an actual use process of the positive electrode active material, usually, a "fully charged state" is set, and a "charge cut-off voltage" is set, to ensure safe use of the battery. The "fully charged state" means that a state of charge (State of Charge, SOC) of a secondary battery is 100%. In other words, a secondary battery composed of a positive electrode including the foregoing positive electrode active material is charged to the cut-off charge voltage within a reversible charge and discharge range. The "fully charged state" or the "charge cut-off voltage" varies due to a difference in the positive electrode active material or a difference in safety requirement. When the secondary battery prepared from the positive electrode active material including the lithium nickel cobalt manganese oxide is in the "fully charged state", the delithiation of the positive electrode active material is usually around the "78% delithiated state" to ensure normal use.

In this specification, with reference to mappings between "delithiated states" and "voltages", the positive electrode active material in the "78% delithiated state" is obtained for research. Specifically, the positive electrode active material is used to prepare a series of standard button half-cells that are separately charged to 4.0 V, 4.1 V, 4.2 V, 4.3 V, 4.4 V, 4.5 V, 4.6 V, and 4.7 V at a rate of 0.1C. Then a positive electrode plate of the battery is taken, and an electrolyte is removed through washing, to digest the positive electrode active material. An inductively coupled plasma-optical emission spectrometer (inductively coupled plasma-Optical Emission spectrometer, ICP-OES) is used to test mass concentrations of Li, transition metals (Ni, Co, and Mn), and an O element of the positive electrode active material, to calculate the "delithiated state". Mappings between charging voltages and "delithiated states" are obtained, and then a charging voltage corresponding to the "78% delithiated state" is obtained. Then the button half-cells are charged to the voltage corresponding to the "78% delithiated state", and the positive electrode active material in the "78% delithiated state" may be obtained through disassembly for further research.

A valence of the doping element in the positive electrode active material in the "78% delithiated state" may be obtained through an X-ray photoelectron spectroscopy (XPS) test, and more accurately, may be obtained through a synchrotron radiation photoelectron spectroscopy (Synchrotron radiation photoelectron spectroscopy, SRPES) test.

The inventor further finds that the doping element has two or more different valence states in the positive electrode active material in the "78% delithiated state", and the amount of doping element in the highest valence state accounts for 40% to 90% of the total amount of doping element, so that an onset exothermic temperature and a maximum exothermic temperature of a main exothermic peak in a DSC spectrogram of the positive electrode active material in the "78% delithiated state" are both increased, and an integral area and a peak width at half height of the main exothermic peak can be both reduced.

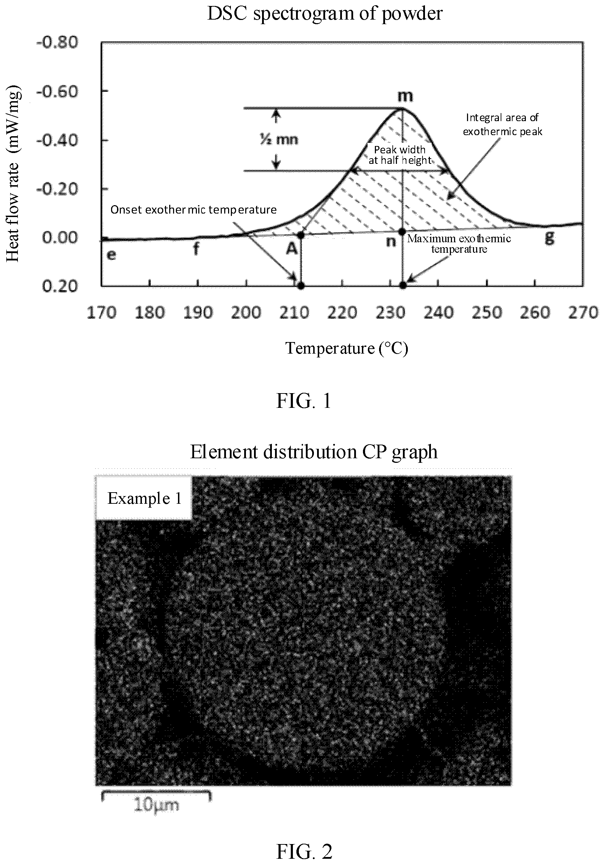

The DSC spectrogram of the positive electrode active material in the "78% delithiated state" is obtained through measurement by using a differential scanning calorimeter. FIG. 1 is a schematic DSC spectrogram of a positive electrode active material according to an embodiment of this application. As shown in FIG. 1, the DSC spectrogram is a curve graph drawn with a heat flow rate as an ordinate and a temperature as an abscissa. In this specification, the main exothermic peak is a peak with a largest integral area in the DSC spectrogram, and is an exothermic peak resulting from a phase change of a layered phase structure of the positive electrode active material due to oxygen release. The onset exothermic temperature of the main exothermic peak is an intersection (that is, an extrapolation starting point) A between a tangent to a maximum-slope point on a low-temperature side of the main exothermic peak and an extension of a baseline ef before the peak. The integral area of the main exothermic peak is an area of a region enclosed by the exothermic peak and an inscribed baseline fg, and is used to indicate heat emitted by the positive electrode active material per unit weight in this interval. The peak width at half height of the main exothermic peak is a peak width at half of a peak height mn, where n is an intersection between the inscribed baseline fg and a straight line. The straight line is perpendicular to the abscissa and starts from a peak top m of the main exothermic peak.

The inventor finds through research that, in the DSC spectrogram of the positive electrode active material in the "78% delithiated state", the onset exothermic temperature of the main exothermic peak is relatively high, so that during a high-temperature cycling process or under a heating condition, the positive electrode active material can have relatively high structural stability and always remain in a layered phase state with strong electrochemical activity, in which oxygen atoms are not likely to deviate from original lattice locations. The positive electrode active material is not prone to irreversible structural phase changes, and presents relatively high thermal stability and high-temperature cycle stability, thereby improving high-temperature cycling performance and safety performance of the battery. In some embodiments, in the DSC spectrogram of the positive electrode active material in the "78% delithiated state", the onset exothermic temperature of the main exothermic peak is 200°C or above, optionally, 205°C or above, 207°C or above, or 210°C or above. When in the lithium nickel cobalt manganese oxide, the number of moles of nickel accounts for 50% to 60% of the total number of moles of nickel, cobalt, and manganese, in the DSC spectrogram of the positive electrode active material in the "78% delithiated state", optionally, the onset exothermic temperature of the main exothermic peak may be alternatively 215°C or above, 220°C or above, or 225°C or above.

A peak temperature (namely, the maximum exothermic temperature) of the main exothermic peak is relatively high, so that the positive electrode active material in the "78% delithiated state" is not prone to oxygen release in a heating or high-temperature cycling process, thereby effectively suppressing an irreversible phase change of the positive electrode active material after delithiation. The positive electrode active material has relatively high thermal stability, thereby improving high-temperature cycling performance of the battery. In some embodiments, in the DSC spectrogram of the positive electrode active material in the "78% delithiated state", the peak temperature of the main exothermic peak may be 230°C or above. When in the lithium nickel cobalt manganese oxide, the number of moles of nickel accounts for 50% to 60% of the total number of moles of nickel, cobalt, and manganese, in the DSC spectrogram of the positive electrode active material in the "78% delithiated state", optionally, the peak temperature of the main exothermic peak may be alternatively 240°C or above, 245°C or above, or 247°C or above.

The integral area of the main exothermic peak is relatively small, so that an amount of heat released by the positive electrode active material in the "78% delithiated state" during a high-temperature cycling process or under a heating condition is reduced. This indicates that the positive electrode active material is subject to a relatively slight irreversible reaction or relatively small structural damage during the high-temperature cycling process or under the heating condition. Thermal stability and high-temperature cycle stability of the positive electrode active material are effectively improved. In some embodiments, in the DSC spectrogram of the positive electrode active material in the "78% delithiated state", the integral area of the main exothermic peak is 100 J/g or below, optionally, 88 J/g or below, 85 J/g or below, 74 J/g or below, 67 J/g or below, 54 J/g or below, or 47 J/g or below.

The peak width at half height of the main exothermic peak is relatively small, so that an irreversible reaction or structural damage of the positive electrode active material in the "78% delithiated state" during a high-temperature cycling process or under a heating condition is significantly relieved. Thermal stability and high-temperature cycle stability of the positive electrode active material are greatly improved, thereby greatly improving battery performance.

The peak width at half height of the main exothermic peak is relatively small, so that doping modification of the positive electrode active material does not result in obvious new phases. The doping element is essentially for doping and substitution in one or more of nickel sites, manganese sites, and cobalt sites. The positive electrode active material maintains a good layered crystal structure. The positive electrode active material can provide a good carrier for deintercalation of lithium ions, thereby facilitating intercalation and deintercalation of lithium ions, preventing reversible lithium ions from being consumed on an electrode surface or in an electrolyte, and effectively reducing an irreversible capacity. Therefore, the positive electrode active material has a relatively high initial capacity and cycling capacity retention rate, thereby improving energy density and normal-temperature and high-temperature cycling performance of the battery.

In some embodiments, in the DSC spectrogram of the positive electrode active material in the "78% delithiated state", the peak width at half height of the main exothermic peak is 30°C or below, optionally, 28°C or below, 25°C or below, or 23°C or below.

In the positive electrode active material in this embodiment of this application, the doping element may be selected from one or more of transition metal elements other than nickel, cobalt, and manganese, and elements of groups IIIA to VIA other than carbon, nitrogen, oxygen, and sulfur. In some embodiments, in the positive electrode active material in the "78% delithiated state", one part the doping element has one or more valences of +2, +3, and +4, and the other part of the doping element has one or more valences of +4, +5, +6, +7, and +8. Optionally, in the positive electrode active material in the "78% delithiated state", one part of the doping element has one or more valences of +3 and +4, and the other part of the doping element has one or more valences of +5, +6, +7, and +8. Further optionally, in the positive electrode active material in the "78% delithiated state", one part of the doping element has one or more valences of +3 and +4, and the other part of the doping element has one or more valences of +5 and +6.

In the positive electrode active material in the "78% delithiated state", a part of the doping element has a relatively high valence state, that is, the doping element contributes more electrons to the positive electrode active material and can strengthen binding on oxygen atoms. With the positive electrode active material, energy density and high-temperature cycling performance of the battery can be improved.

In particular, in the positive electrode active material in the "78% delithiated state", a low-valence doping element can also more effectively contribute electrons to the positive electrode active material, especially when a highest-valence doping element and a lowest-valence doping element have a large difference in valence (for example, the difference is 2 or above), thereby further improving energy density and high-temperature cycling performance of the battery.

In some optional embodiments, the doping element may include one or more polyvalent elements of Ti, V, Cr, Se, Nb, Mo, Ru, Rh, Pd, Sb, Te, Ce, and W. Optionally, the doping element may include one or more of Se, Nb, Mo, Ru, Rh, Sb, Te, Ce, and W. Optionally, the doping element may include one or more of Se, Nb, Mo, Sb, and W. An appropriate doping element can better provide a charge compensation effect and stabilize a structure of the positive electrode active material, thereby further improving the energy density and the high-temperature cycling performance of the battery.

In some optional embodiments, a relative deviation of a local mass concentration of the doping element in a particle of the positive electrode active material is 32% or below, further optionally, 30% or below, particularly optionally, 20% or below, 16% or below, 12% or below, or 10% or below.

In this specification, the local mass concentration of the doping element in the particle of the positive electrode active material is a mass concentration of the doping element in all elements in a finite volume element of any selected location in the particle, and may be obtained by testing element concentration distribution through EDX (Energy Dispersive X-Ray Spectroscopy, energy dispersive X-ray spectroscopy) or EDS element analysis in combination with TEM (Transmission Electron Microscope, transmission electron microscope) or SEM (Scanning Electron Microscope, scanning electron microscope) single-point scanning, or in other similar manners. When testing is performed through EDX or EDS element analysis in combination with TEM or SEM single-point scanning, mass concentrations of the doping element in $\mu g/g$ at different locations in the particle of the positive electrode active material are denoted as $\eta_1, \eta_2, \eta_3, ..., \eta_n$, where n is a positive integer greater than 15.

An average mass concentration of the doping element in the particle of the positive electrode active material is a mass concentration of the doping element in all elements in one or more particles of the positive electrode active material, and may be obtained by testing element concentration distribution through EDX or EDS element analysis in combination with TEM or SEM surface scanning, or in other similar manners. When testing is performed in the manner of testing the element concentration distribution through EDX or EDS element analysis in combination with TEM or SEM surface scanning, a test surface includes all test locations in the foregoing single-point test. The average mass concentration of the doping element in the particle of the positive electrode active material is denoted as $\overline{\eta}$, with a unit of $\mu g/g$.

The relative deviation $\sigma$ of the local mass concentration of the doping element in the particle of the positive electrode active material is calculated based on a formula (1).

$$\sigma = \frac{\max\left\{\left|\eta_1-\overline{\eta}\right|, \left|\eta_2-\overline{\eta}\right|, \left|\eta_3-\overline{\eta}\right|, \cdots, \left|\eta_n-\overline{\eta}\right|\right\}}{\overline{\eta}} \qquad \text{Formula (1)}$$

The relative deviation of the local mass concentration of the doping element in the particle of the positive electrode active material is within the foregoing range, indicating that distribution uniformity of the doping element in the particle is relatively high. Properties of all locations in the particle of the positive electrode active material remain the same, and the doping element can improve structural stability of each location in the particle, and suppress oxygen release and a structural phase change of each location in the particle. The onset exothermic temperature and the maximum exothermic temperature of the main exothermic peak in the DSC spectrogram of the positive electrode active material in the "78% delithiated state" are both further increased, and the integral area and the peak width at half height of the main exothermic peak are both further reduced. In other words, stability of the positive electrode active material during a high-temperature cycling process or under a heating condition is further improved, so that overall performance of the battery can be better improved.

In the uniformly doped positive electrode active material, a migration and diffusion capability of lithium ions in different regions inside a particle can be at the same level, so that the positive electrode active material can have relatively high lithium ion transport performance, thereby improving capacity performance, energy density, and cycling performance of the battery. All locations in the particle of the uniformly doped positive electrode active material have similar structural stability and antideformation capabilities, so that stress in the particle is uniformly distributed. Therefore, the particle of the positive electrode active material is not prone to cracking, thereby preventing side reactions and capacity and cycling performance deterioration caused by exposure of fresh surfaces due to cracking, and improving high-temperature cycling performance of the battery.

In some embodiments, a true doping concentration $\omega$ of the positive electrode active material may satisfy 1500 $\mu g/cm^3 \le \omega \le 60000$ $\mu g/cm^3$, optionally, 2300 $\mu g/cm^3 \le \omega \le 50000$ $\mu g/cm^3$, and further optionally, 3000 $\mu g/cm^3 \le \omega \le 40000$ $\mu g/cm^3$, 14810 $\mu g/cm^3 \le \omega \le 49110$ $\mu g/cm^3$, 14810 $\mu g/cm^3 \le \omega \le 36720$ $\mu g/cm^3$, or 24890 $\mu g/cm^3 \le \omega \le 25490$ $\mu g/cm^3$.

In this specification, the true doping concentration $\omega$ of the positive electrode active material is calculated by using a formula (2).

$$\omega = \varphi \times \rho_{true} \qquad \text{Formula (2)}$$

In the formula (2), $\omega$ is the true doping concentration of the positive electrode active material, with a unit of $\mu g/cm^3$.

$\rho_{true}$ is true density of the positive electrode active material, with a unit of $g/cm^3$, and is equal to a ratio of mass of the positive electrode active material to a true volume of the positive electrode active material, where the true volume is an actual volume of solid matter, and does not include pores inside or between particles of the positive electrode active material, $\rho_{true}$ may be measured by using a well-known instrument and method in the art, for example, a gas volume method that may be performed by using a powder true density tester.

$\varphi$ is a mass concentration of the doping element in the positive electrode active material, with a unit of $\mu g/g$, that is, mass of a doping element contained in each gram of the positive electrode active material, $\varphi$ indicates doping element contained in the global macroscopic positive electrode active material, including doping element distributed into particles of the positive electrode active material, doping element concentrated in other phases on surfaces of particles of the positive electrode active material, and doping element located between particles of the positive electrode active material, $\varphi$ may be measured by using a solution absorption spectrum of the positive electrode active material, for example, by using an ICP (Inductive Coupled Plasma Emission Spectrometer, inductive coupled plasma emission spectrometer) or XAFS (X-ray absorption fine structure spectroscopy, X-ray absorption fine structure spectroscopy).

The true doping concentration of the positive electrode active material is within an appropriate range, thereby helping ensure that the doping element of the positive electrode active material in the "78% delithiated state" has two or more different valence states, and the amount of doping element in the highest valence state accounts for 40% to 90% of the total amount of doping element. The doping element can contribute more electrons to the positive electrode active material, and fully stabilize a structure of the positive electrode active material, thereby better improving energy density and high-temperature cycling performance of the battery. In addition, the doping element can further increase the onset exothermic temperature and the maximum exothermic temperature of the main exothermic peak in the DSC spectrogram of the positive electrode active material in the "78% delithiated state", and further reduce the integral area and the peak width at half height of the main exothermic peak.

In addition, the true doping concentration of the positive electrode active material is within the foregoing range, thereby further ensuring that the doping element is for doping in a transition metal layer, preventing the doping element from entering a lithium layer, and ensuring that the particle of the positive electrode active material has a relatively high lithium ion transport and diffusion capability, so that the battery has relatively high capacity performance and cycling performance.

In some preferred embodiments, a deviation $\varepsilon$ of the mass concentration $\varphi$ of the doping element in the positive electrode active material relative to the average mass concentration $\bar{\eta}$ of the doping element in the particle of the positive electrode active material satisfies $\varepsilon < 50\%$. Optionally, $\varepsilon \le 30\%$. Further optionally, $\varepsilon \le 20\%$, $\le 15\%$, $< 13\%$, $< 12\%$, or $\le 10\%$.

$\varepsilon$ is calculated by using the following formula (3).

$$\varepsilon = \frac{|\varphi - \bar{\eta}|}{\varphi} \qquad \text{Formula (3)}$$

$\varepsilon$ of the positive electrode active material is within the foregoing range, indicating that successful doping of the doping element into particles of the positive electrode active material, and there is a relatively small amount of doping element distributed in other phases on surfaces of particles of the positive electrode active material, and doping element embedded in gaps between particles of the positive electrode active material. The positive electrode active material has relatively good macroscopic and microscopic uniformity, and a uniform structure. In a charge and discharge cycling process, swelling and contraction degrees of particles of the positive electrode active material can remain the same, and the particles have high stability, so that the positive electrode active material has relatively high capacity performance and normal-temperature and high-temperature cycling performance.

The positive electrode active material in this embodiment of this application can be uniformly doped within the foregoing proper true doping concentration range, and consistency between microscopic distribution and macroscopic content of the doping element is ensured, so that thermal stability and high-temperature cycle stability of the positive electrode active material can be more effectively improved, thereby better improving overall performance of the battery.

In some embodiments, true density $\rho_{true}$ of the positive electrode active material may satisfy 4.6 g/cm$^3$ ≤ $\rho_{true}$ ≤ 4.9 g/cm$^3$. The positive electrode active material has a relatively high specific capacity, thereby improving capacity performance and energy density of the battery.

In some optional embodiments, in the lithium nickel cobalt manganese oxide the number of moles of nickel accounts for 70% to 95%, for example, 70% to 90%, of the total number of moles of nickel, cobalt, and manganese. The positive electrode active material with high nickel content is characterized by a higher specific capacity and has higher cycling stability, so that energy density and cycling performance of the lithium-ion secondary battery can be improved.

In some examples, the lithium nickel cobalt manganese oxide may be a compound represented by $Li_{1+a}[Ni_xCo_yMn_zM^1_b]O_{2-p}X_p$. In the expression, $M^1$ is a doping element, and is for doping and substitution in one or more of nickel sites, cobalt sites, and manganese sites; X is an oxygen site substituent element, and may be selected from one or more of F, N, P and S; and $0.5 \leq x \leq 0.95, 0 \leq y < 0.3, 0 \leq z < 0.3, -0.1 \leq a < 0.2, 0 < b < 0.3, x + y + z + b = 1$, and $0 \leq p < 0.2$. With the ternary positive electrode active material with high nickel content, the battery can have relatively high capacity performance, energy density, and normal-temperature and high-temperature cycling performance.

Optionally, $0.7 \leq x \leq 0.9, 0 < y < 0.3$, and $0 < z < 0.3$. The ternary positive electrode active material with high nickel content has high energy density and good structural stability, thereby enabling the battery to have high energy density and a long cycle life.

Optionally, $M^1$ is selected from one or more polyvalent elements of Ti, V, Cr, Se, Nb, Mo, Ru, Rh, Pd, Sb, Te, Ce, and W. Optionally, $M^1$ may include one or more of Se, Nb, Mo, Ru, Rh, Sb, Te, Ce, and W. Optionally, $M^1$ may include one or more of Se, Nb, Mo, Sb, and W.

Alternatively, the lithium nickel cobalt manganese oxide may be a compound represented by $Li_{1+c}[Ni_{r-d}Co_sMn_tM^2_d]O_{2-q}X'_q$. In the expression, $M^2$ is a doping element, and is partially substituted in a nickel site; X' is an oxygen site substituent element, and is preferably selected from one or more of F, N, P and S; and $0.5 \leq r - d \leq 0.95, 0 \leq s < 0.3, 0 \leq t < 0.3, -0.1 \leq c < 0.2, 0 < d < 0.3, r + s + t = 1$, and $0 \leq q < 0.2$. With the ternary positive electrode active material with high nickel content, the battery can have relatively high capacity performance, energy density, and normal-temperature and high-temperature cycling performance.

Optionally, $0.7 \leq r - d \leq 0.9, 0 < s < 0.3$, and $0 < t < 0.3$. The ternary positive electrode active material with high nickel content has high energy density and good structural stability, thereby enabling the battery to have high energy density and a long cycle life.

Optionally, $M^2$ is selected from one or more polyvalent elements of Ti, V, Cr, Se, Nb, Mo, Ru, Rh, Pd, Sb, Te, Ce, and W. Optionally, $M^2$ may include one or more of Se, Nb, Mo, Ru, Rh, Sb, Te, Ce, and W. Optionally, $M^2$ may include one or more of Se, Nb, Mo, Sb, and W.

The lithium nickel cobalt manganese oxide in the foregoing examples may be independently used for the positive electrode active material, or a combination of any two or more of the foregoing lithium nickel cobalt manganese oxides may be used for the positive electrode active material.

Optionally, a volume average particle size $D_v50$ of the positive electrode active material is 5 $\mu$m to 20 $\mu$m, further optionally, 8 $\mu$m to 15 $\mu$m, and further optionally, 9 $\mu$m to 11 $\mu$m. $D_v50$ of the positive electrode active material is within an appropriate range, and a migration path of lithium ions and electrons in the material is relatively short, thereby further improving transport and diffusion performance of lithium ions and electrons in the positive electrode active material, reduce battery polarization, and improving cycling performance and rate performance of the lithium-ion secondary battery. In addition, the positive electrode active material can further have relatively high compacted density, thereby improving energy density of the battery.

$D_v50$ of the positive electrode active material is within the foregoing range, thereby helping reduce side reactions of an electrolyte on a surface of the positive electrode active material and reduce agglomeration between particles of the positive electrode active material, and improving normal-temperature and high-temperature cycling performance and safety performance of the positive electrode active material.

Optionally, a specific surface area of the positive electrode active material is 0.2 m$^2$/g to 1.5 m$^2$/g, further optionally, 0.3 m$^2$/g to 1 m$^2$/g. The specific surface area of the positive electrode active material is within an appropriate range, thereby ensuring that the positive electrode active material has a relatively large active specific surface area, helping reduce side reactions of an electrolyte on the surface of the positive electrode active material, and improving capacity performance and a cycle life of the positive electrode active material. In addition, agglomeration between particles of the positive electrode active material in a slurry preparation or charge and discharge process can be suppressed, thereby improving energy density and cycling performance of the battery.

Optionally, tap density of the positive electrode active material is 2.3 g/cm$^3$ to 2.8 g/cm$^3$. The tap density of the positive electrode active material enables the battery to have relatively high capacity performance and energy density.

Optionally, compacted density of the positive electrode active material under a pressure of 5 tons (equivalent to 49 kN) is 3.1 g/cm$^3$ to 3.8 g/cm$^3$. The compacted density of the positive electrode active material is relatively high, thereby enabling the battery to have relatively high capacity performance and energy density, and enabling the battery to have good normal-temperature cycling performance and high-temperature cycling performance.

Optionally, a shape of the particles in the positive electrode active material of this application is one or more of a spherical shape and a spheroidal shape.

In some embodiments, the positive electrode active material includes a secondary particle aggregated from primary particles. In these embodiments, the aforementioned "particle" includes the secondary particle.

In this specification, $D_v50$ of the positive electrode active material has a meaning well-known in the art, and is also referred to as a median particle size. $D_v50$ indicates a particle size corresponding to 50% of volume distribution of particles in the positive electrode active material. $D_v50$ of the positive electrode active material may be measured by using a well-known instrument and method in the art, for example, may be conveniently measured by using a laser particle size analyzer (such as Mastersizer 3000 of Malvern Instruments, UK).

The specific surface area of the positive electrode active material has a meaning well-known in the art, and may be measured by using a well-known instrument and method in the art, for example, may be measured by using a nitrogen-adsorption specific surface area analysis test method and calculated by using a BET (Brunauer Emmett Teller) method. The nitrogen-adsorption specific surface area analysis test may be performed by using a NOVA 2000e specific surface area and aperture analyzer of Quantachrome Instruments (US). In a specific example, the test method is as follows: 8.000 g to 15.000 g of positive electrode active material is taken by using a weighed empty sample tube. The positive electrode active material is well stirred and weighed. The sample tube is put into a NOVA 2000e degassing station for degassing. Total mass of a degassed positive electrode active material and the sample tube is obtained through weighing. Mass G of the degassed positive electrode active material is obtained by subtracting mass of the empty sample tube from the total mass. The sample tube is put into NOVA 2000e. An adsorption amount of nitrogen on a surface of the positive electrode active material under different relative pressures is measured. A monolayer adsorption amount is calculated based on a Brunauer-Emmett-Teller multilayer adsorption theory and a formula thereof. Then a total surface area A of the positive electrode active material is calculated, and a specific surface area of the positive electrode active material is calculated by using *A/G.*

The tap density of the positive electrode active material has a meaning well-known in the art, and may be measured by using a well-known instrument and method in the art, for example, conveniently measured by using a tap density measuring instrument (such as FZS4-4B).

The compacted density of the positive electrode active material has a meaning well-known in the art, and may be measured by using a well-known instrument and method in the art, for example, conveniently measured by using an electronic pressure testing machine (such as UTM7305).

The following schematically describes a method for preparing a positive electrode active material. According to the preparation method, any one of the foregoing positive electrode active materials can be prepared. The preparation method includes:

mixing a positive electrode active material precursor, a lithium source, and a doping element precursor, and performing sintering to a positive electrode active material.

The positive electrode active material precursor may be one or more of an oxide, hydroxide, or carbonate that contains Ni, Co, and Mn according to a stoichiometric ratio, for example, hydroxide that contains Ni, Co, and Mn according to a stoichiometric ratio.

The positive electrode active material precursor may be obtained by using a known method in the art, for example, prepared by using a co-precipitation method, a gel method, or a solid phase method.

In an example, a Ni source, a Co source, and a Mn source are dispersed in a solvent to obtain a mixed solution; the mixed solution, a strong base solution, and a complexing agent solution are all pumped into a stirring reactor through continuous cocurrent reactions, where a pH value of the reaction solution is controlled to be 10 to 13, a temperature in the reactor is 25°C to 90°C, and an inert gas is introduced for protection during a reaction process; after the reaction is completed, aging, filtration, washing, and vacuum drying are performed to obtain hydroxide that contains Ni, Co, and Mn.

The Ni source may be soluble nickel salt, for example, one or more of nickel sulfate, nickel nitrate, nickel chloride, nickel oxalate, and nickel acetate; for another example, one or more of nickel sulfate and nickel nitrate; for another example, nickel sulfate. The Co source may be soluble cobalt salt, for example, one or more of cobalt sulfate, cobalt nitrate, cobalt chloride, cobalt oxalate, and cobalt acetate; for another example, one or more of cobalt sulfate and cobalt nitrate; for another example, cobalt sulfate. The Mn source may be soluble manganese salt, for example, one or more of manganese sulfate, manganese nitrate, manganese chloride, manganese oxalate, and manganese acetate; for another example, one or more of manganese sulfate and manganese nitrate; for another example, manganese sulfate.

The strong base may be one or more of LiOH, NaOH, and KOH, for example, NaOH. The complexing agent may be one or more of ammonia, ammonium sulfate, ammonium nitrate, ammonium chloride, ammonium citrate, and ethylenediaminetetraacetic acid (EDTA), for example, ammonia.

There are no special limitations on solvents of the mixed solution, the strong base solution, and the complexing agent solution. For example, the solvents of the mixed solution, the strong base solution, and the complexing agent solution each are one or more of deionized water, methanol, ethanol, acetone, isopropyl, and hexanol, for example, deionized water.

The inert gas introduced during the reaction process is, for example, one or more of nitrogen, argon, and helium.

The lithium source may be one or more of lithium oxide ($Li_2O$), lithium phosphate ($Li_3PO_4$), lithium dihydrogen phosphate ($LiH_2PO_4$), lithium acetate ($CH_3COOLi$), lithium hydroxide ($LiOH$), lithium carbonate ($Li_2CO_3$), and lithium nitrate (LiNOs). Further, the lithium source is one or more of lithium carbonate, lithium hydroxide, and lithium nitrate. Furthermore, the lithium source is lithium carbonate.

The doping element precursor may be one or more of an oxide, nitric acid compound, carbonic acid compound, hydroxide compound, or acetic acid compound that contains a doping element. In the doping element precursor, at least part of doping element is still capable of contributing electrons, that is, having not reached a highest valence state of the element.

Further, the doping element precursor may be alternatively a combination of a precursor containing a low-valence doping element and a precursor containing a high-valence doping element. The precursor containing a low-valence doping element may be one or more of an oxide, nitric acid compound, carbonic acid compound, hydroxide compound, or acetic acid compound of a doping element whose valence is less than or equal to 4. The precursor containing a high-valence doping element may be one or more of an oxide, nitric acid compound, carbonic acid compound, hydroxide compound, or acetic acid compound of a doping element whose valence is greater than or equal to 4.

The doping element oxide may be, for example, one or more of a titanium oxide (such as $TiO_2$ or $TiO$), a vanadium oxide (such as $V_2O_5$, $V_2O_4$, or $V_2O_3$), a chromium oxide (such as $CrO_3$ or $Cr_2O_3$), a selenium oxide (such as $SeO_2$), a niobium oxide (such as $Nb_2O_5$ or $NbO_2$), a molybdenum oxide (such as $MoO_2$ or MoOs), a ruthenium oxide (such as $RuO_2$), a rhodium oxide (such as $Rh_2O_3$), a palladium oxide (such as $PdO$), an antimony oxide (such as $Sb_2O_5$ or $Sb_2O_3$), a tellurium oxide (such as $TeO_2$), a cerium oxide (such as $CeO_2$) and a tungsten oxide (such as $WO_2$ or $WO_3$).

The positive electrode active material precursor, the lithium source, and the doping element precursor may be mixed by using a ball mill mixer or a high-speed mixer. For example, the high-speed mixer is used to mix the materials for 0.5 h to 3 h.

The mixed materials are added to an atmosphere sintering furnace for sintering. A sintering atmosphere is an oxygen-containing atmosphere, for example, an air atmosphere or an oxygen atmosphere. Optionally, an oxygen concentration of the sintering atmosphere is 70% to 100%, for example, 75% to 95%. A sintering temperature is, for example, 600°C to 1000°C. Optionally, the sintering temperature is 700°C to 900°C. This enables the doping element to have relatively high distribution uniformity. Sintering duration may be adjusted based on an actual situation, for example, 5 h to 25 h; for another example, 10 h to 20 h.

For elements that are relatively difficult in doping, such as doping elements with a large atomic radius, doping uniformity may be improved by increasing the sintering temperature and/or extending the sintering duration.

It should be noted that, during preparation of the positive electrode active material, there are a plurality of theoretically feasible manners of controlling a valence and a proportion of a doping element in the positive electrode active material that includes a lithium nickel cobalt manganese oxide and that is in a "78% delithiated state", for example, a valence state of the doping element precursor, a doping element amount, oxidability of a sintering atmosphere during doping, a quantity of times of sintering, uniformity of mixing, a sintering temperature, and sintering duration. In this application document, a manner of controlling a doping precursor type and overall sintering duration and temperature in solid-phase sintering and doping is listed, and the positive electrode active material that includes the lithium nickel cobalt manganese oxide and in which the doping element has preset valence distribution in the "78% delithiated state" is obtained. The positive electrode active material is characterized by high energy density, thermal stability, and high-temperature cycle stability. Preferably, through further control on doping uniformity, the positive electrode active material with DSC characteristics in the 78% delithiated state has a better effect. It should be understood that the method described in this specification is merely intended to explain this application, but not to limit this application.

In some embodiments, a sintered product may be further crushed and sieved to obtain a positive electrode active material with an optimized particle size distribution and specific surface area. There are no special limitations on a crushing manner. The crushing manner may be selected according to an actual requirement, for example, a particle crusher is used.

## Positive electrode plate

This application provides a positive electrode plate, and the positive electrode plate uses any one or more positive electrode active materials of this application.

Because the positive electrode plate of this application uses the positive electrode active material of this application, a battery using the positive electrode plate can have both good normal-temperature and high-temperature cycling performance and relatively high energy density.

Specifically, the positive electrode plate includes a positive electrode current collector and a positive electrode active material layer disposed on at least one surface of the positive electrode current collector. For example, the positive electrode current collector includes two opposite surfaces in its thickness direction, and the positive electrode active material layer is stacked on either or both of the two surfaces of the positive electrode current collector.

The positive electrode active material layer includes the positive electrode active material of this application.

In addition, the positive electrode active material layer may further include a conductive agent and a binder. Types of the conductive agent and the binder in the positive electrode active material layer are not specifically limited in this application, and the conductive agent and the binder may be selected according to an actual requirement.

In an example, the conductive agent may be one or more of graphite, superconducting carbon, acetylene black, carbon black, Ketjen black, a carbon dot, a carbon nanotube, graphene, and carbon nanofiber; and the binder may be one or more of styrene-butadiene rubber (SBR), water-based acrylic resin (water-based acrylic resin), carboxymethyl cellulose (CMC), polyvinylidene fluoride (PVDF), polytetrafluoroethylene (PTFE), polyvinyl butyral (PVB), ethylene vinyl acetate (EVA), a vinylidene fluoride-tetrafluoroethylene-propylene terpolymer, a vinylidene fluoridehexafluoropropylene-tetrafluoroethylene terpolymer, a tetrafluoroethylenehexafluoropropylene copolymer, a fluorine-containing acrylic resin, and polyvinyl alcohol (PVA).

The positive electrode current collector may be a metal foil or a porous metal plate with good conductivity and mechanical properties. The positive electrode current collector may be made of one or more of aluminum, copper, nickel, titanium, silver, and their respective alloys. The positive electrode current collector is, for example, an aluminum foil.

The positive electrode plate may be prepared according to a conventional method in the art. For example, the positive electrode active material, the conductive agent, and the binder are dispersed in a solvent, where the solvent may be N-methylpyrrolidone (NMP) or deionized water, to form a uniform positive electrode slurry. The positive electrode slurry is applied to the positive electrode current collector, and processes such as drying and roll-in are performed to obtain the positive electrode plate.

## Lithium-ion secondary battery

This application provides a lithium-ion secondary battery. The lithium-ion battery includes a positive electrode plate, a negative electrode plate, a separator, and an electrolyte, where the positive electrode plate is any positive electrode plate of this application.

The lithium-ion secondary battery uses the positive electrode active material of this application, and therefore can have both good normal-temperature and high-temperature cycling performance and relatively high energy density.

The negative electrode plate may be a lithium metal plate.

Alternatively, the negative electrode plate may include a negative electrode current collector and a negative electrode active material layer disposed on at least one surface of the negative electrode current collector. For example, the negative electrode current collector includes two opposite surfaces in its thickness direction, and the negative electrode active material layer is stacked on either or both of the two surfaces of the negative electrode current collector.

The negative electrode active material layer includes the negative electrode active material. A type of the negative electrode active material is not specifically limited in this embodiment of this application, and the negative electrode active material may be selected according to an actual requirement. In an example, the negative electrode active material may be one or more of natural graphite, artificial graphite, mesocarbon microbeads (MCMB), hard carbon, soft carbon, silicon, a siliconcarbon composite, $SiO_m$ ($0 < m < 2$, for example, $m = 1$), a Li-Sn alloy, a Li-Sn-O alloy, Sn, SnO, $SnO_2$, spinel-structure lithium titanate $Li_4Ti_5O_{12}$, a Li-Al alloy, and lithium metal.

The negative electrode active material layer may further include a conductive agent and a binder. Types of the conductive agent and the binder in the negative electrode active material layer are not specifically limited in this embodiment of this application, and the conductive agent and the binder may be selected according to an actual requirement. In an example, the conductive agent is one or more of graphite, superconducting carbon, acetylene black, carbon black, Ketjen black, a carbon dot, a carbon nanotube, graphene, and carbon nanofiber; and the binder is one or more of styrene-butadiene rubber (SBR), polyvinylidene fluoride (PVDF), polytetrafluoroethylene (PTFE), polyvinyl butyral (PVB), and water-based acrylic resin (water-based acrylic resin).

Optionally, the negative electrode active material layer may further include a thickener, for example, sodium carboxymethyl cellulose (CMC-Na).

The negative electrode current collector may be a metal foil or a porous metal plate with good conductivity and mechanical properties. The negative electrode current collector may be made of one or more of copper, nickel, titanium, iron, and their respective alloys. The negative electrode current collector is, for example, a copper foil.

The negative electrode plate may be prepared according to a conventional method in the art. For example, the negative electrode active material, the conductive agent, the binder, and the thickener are dispersed in a solvent, where the solvent may be N-methylpyrrolidone (NMP) or deionized water, to form a uniform negative electrode slurry. The negative electrode slurry is applied to the negative electrode current collector, and processes such as drying and roll-in are performed to obtain the negative electrode plate.

In the lithium-ion secondary battery in this embodiment of this application, the electrolyte may be a solid electrolyte, for example, a polymer electrolyte or an inorganic solid electrolyte, but is not limited thereto. Alternatively, the electrolyte may be a liquid electrolyte. The liquid electrolyte includes a solvent and a lithium salt dissolved in the solvent.

The solvent may be a non-aqueous organic solvent, for example, one or more, for another example, at least two, of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), methyl formate (MF), methyl acetate (MA), ethyl acetate (EA), propyl acetate (PA), methyl propionate (MP), ethyl propionate (EP), propyl propionate (PP), methyl butyrate (MB), and ethyl butyrate (EB).

The lithium salt may be one or more of $LiPF_6$ (lithium hexafluorophosphate), $LiBF_4$ (lithium tetrafluoroborate), $LiClO_4$ (lithium perchlorate), $LiAsF_6$ (lithium hexafluoroarsenate), LiFSI (lithium bisfluorosulfonimide), LiTFSI (lithium bistrifluoromethanesulfonimide), LiTFS (lithium trifluoromethanesulfonate), LiDFOB (lithium difluorooxalate borate), LiBOB (lithium bisoxalate borate), $LiPO_2F_2$ (lithium difluorophosphate), LiDFOP (lithium difluorooxalate phosphate), and LiTFOP (lithium tetrafluorooxalate phosphate), for example, one or more of $LiPF_6$ (lithium hexafluorophosphate), $LiBF_4$ (lithium tetrafluoroborate), LiBOB (lithium bisoxalate borate), LiDFOB (lithium difluorooxalate borate), LiTFSI (lithium bistrifluoromethanesulfonimide), and LiFSI (lithium bisfluorosulfonimide).

Optionally, the liquid electrolyte may further contain another additive, for example, one or more of vinylene carbonate (VC), vinyl ethylene carbonate (VEC), fluoroethylene carbonate (FEC), difluoroethylene carbonate (DFEC), trifluoropropylene carbonate (TFPC), succinonitrile (SN), adiponitrile (ADN), glutaronitrile (GLN), hexanetrinitrile (HTN), 1,3-propane sultone (1,3-PS), ethylene sulfate (DTD), methylene methanedisulfonate (MMDS), 1-propene-1,3-sultone (PST), propane 1,2-cyclic sulfate (PCS), prop-1-ene-1,3-sultone (PES), 4-propyl-[1,3,2]dioxathiolane-2,2-dioxide (PEGLST), propylene sulfate (TS), 1,4-butane sultone (1,4-BS), ethylene sulfite (DTO), dimethyl sulfite (DMS), diethyl sulfite (DES), sulfonate cyclic quaternary ammonium salt, tris(trimethylsilyl) phosphate (TMSP), and tris(trimethylsilyl) borate (TMSB), but is not limited thereto.

The lithium-ion secondary battery in this embodiment of this application has no special limitations on the separator, and any well-known separator with a porous structure and with electrochemical stability and mechanical stability may be selected, for example, a single-layer or multi-layer film made of one or more of glass fiber, nonwoven fabric, polyethylene (PE), and polyvinylidene fluoride (PVDF).

The positive electrode plate and the negative electrode plate are alternately stacked, and the separator is disposed between the positive electrode plate and the negative electrode plate for separation, to obtain a battery cell, or a battery cell may be obtained through winding. The battery cell is placed in a housing, an electrolyte is injected, and the housing is sealed to obtain the lithium-ion secondary battery.

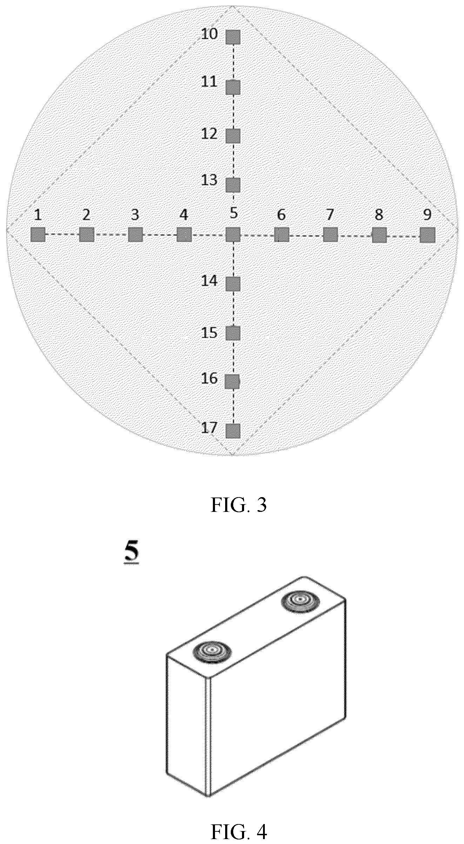

There are no special limitations on a shape of the lithium-ion secondary battery in this application, and the lithium-ion secondary batter may be cylindrical, square, or in any other shape. FIG. 4 shows a lithium-ion secondary battery 5 of a square structure as an example.

In some embodiments, the secondary battery may include an outer package. The outer package is used to package a positive electrode plate, a negative electrode plate, and an electrolyte.

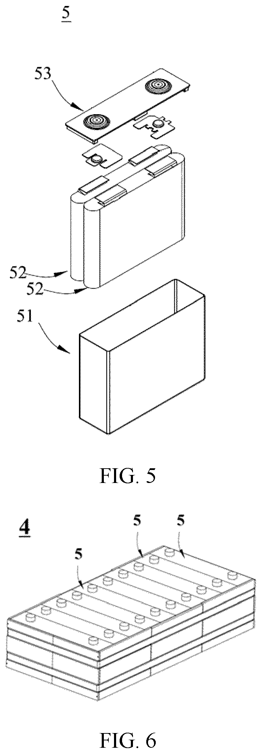

In some embodiments, referring to FIG. 5, the outer package may include a housing 51 and a cover plate 53. The housing 51 may include a base plate and a side plate connected to the base plate. The base plate and the side plate encircle an accommodating cavity. The housing 51 has an opening communicating with the accommodating cavity, and the cover plate 53 can cover the opening to close the accommodating cavity.

The positive electrode plate, the negative electrode plate, and a separator may be wound or laminated to form a battery cell 52. The battery cell 52 is packaged in the accommodating cavity. The electrolyte may be a liquid electrolyte, and the battery cell 52 is infiltrated in the liquid electrolyte. There may be one or more battery cells 52 in the lithium-ion secondary battery 5, and their quantity may be adjusted as required.

In some embodiments, the outer package of the lithium-ion secondary battery may be a hard shell, for example, a hard plastic shell, an aluminum shell, or a steel shell. Alternatively, the outer package of the secondary battery may be a soft package, for example, a soft bag. The soft bag may be made of plastic, for example, may include one or more of polypropylene (PP), polybutylene terephthalate (PBT), polybutylene succinate (PBS), and the like.

In some embodiments, the lithium-ion secondary battery may be assembled into a battery module, and the battery module may include a plurality of lithium-ion secondary batteries. A specific quantity may be adjusted based on a use case and a capacity of the battery module.

FIG. 6 shows a battery module 4 used as an example. Referring to FIG. 6, in the battery module 4, a plurality of lithium-ion secondary batteries 5 may be sequentially arranged in a length direction of the battery module 4. Certainly, the lithium-ion secondary batteries may alternatively be arranged in any other manner. Further, the plurality of lithium-ion secondary batteries 5 may be fixed by using fasteners.

Optionally, the battery module 4 may further include a housing with an accommodating space, and the plurality of lithium-ion secondary batteries 5 are accommodated in the accommodating space.

In some embodiments, the battery module may be further assembled into a battery pack, and a quantity of battery modules included in the battery pack may be adjusted based on application and a capacity of the battery pack.

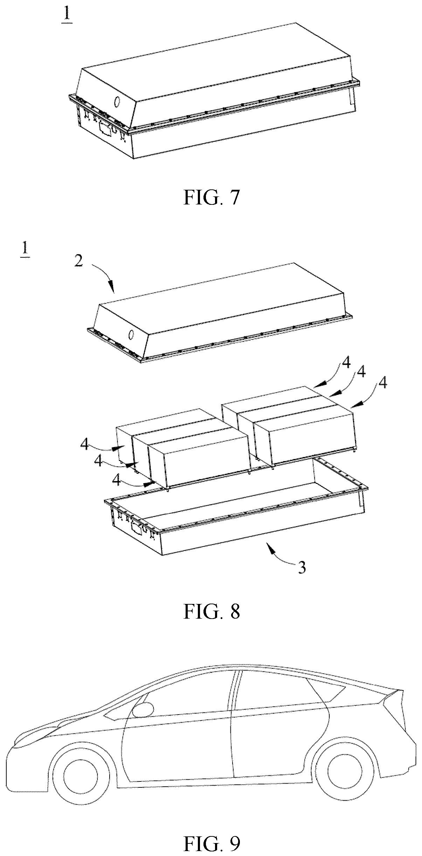

FIG. 7 and FIG. 8 show a battery pack 1 used as an example. Referring to FIG. 7 and FIG. 8, the battery pack 1 may include a battery box and a plurality of battery modules 4 disposed in the battery box. The battery box includes an upper box body 2 and a lower box body 3. The upper box body 2 can cover the lower box body 3 to form enclosed space for accommodating the battery modules 4. The plurality of battery modules 4 may be arranged in the battery box in any manner.

This application further provides an apparatus. The apparatus includes at least one of the lithium-ion secondary battery, the battery module, or the battery pack of this application. The lithium-ion secondary battery, the battery module, or the battery pack may be used as a power source of the apparatus, or may be used as an energy storage unit of the apparatus. The apparatus may include, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

A lithium-ion secondary battery, a battery module, or a battery pack may be selected for the apparatus according to a use requirement of the apparatus.

FIG. 9 shows an apparatus used as an example. The apparatus is a battery electric vehicle, a hybrid electric vehicle, a plug-in hybrid electric vehicle, or the like. To meet a requirement of the apparatus for high power and high energy density of the secondary battery, a battery pack or a battery module may be used.

In another example, the apparatus may be a mobile phone, a tablet computer, a notebook computer, or the like. The apparatus usually requires lightness and thinness, and the lithium-ion secondary battery may be used as a power source.

## Examples

The following examples more specifically describe the content disclosed in this application, and these examples are merely intended for illustrative description, because various modifications and changes made within the scope of the content disclosed in this application are obvious to a person skilled in the art. Unless otherwise specified, all portions, percentages, and ratios reported in the following examples are based on a weight, all reagents used in the examples are commercially available or are synthesized according to a conventional method, and can be directly used without further processing, and all instruments used in the examples are commercially available.

### Example 1

Preparation of a positive electrode active material

A positive electrode active material precursor $[Ni_{0.8}Co_{0.1}Mn_{0.1}](OH)_2$, lithium hydroxide LiOH, molybdenum trioxide MoOs, and molybdenum dioxide $MoO_2$ were added to a high-speed mixer for mixing for 1 h to obtain a mixture. A molar ratio Li/Me of the positive electrode active material precursor to the lithium hydroxide was 1.05, where Me indicated total molar mass of Ni, Co, and Mn in the positive electrode active material precursor, and $MoO_3$ accounted for 40% of total mass of $MoO_2$ and $MoO_3$. The mixture was put into an atmosphere sintering furnace for sintering, where a sintering temperature was 830°C, and a sintering atmosphere was an oxygen-containing atmosphere with an $O_2$ concentration of 90%, and sintering duration was 15 h. A sintered product was crushed and sieved to obtain a ternary positive electrode active material with high nickel content.

Based on testing, a true doping concentration of Mo in the positive electrode active material was 24920 $\mu g/cm^3$, and Mo with a valence of +6 (that is, a highest valence state) in the positive electrode active material in a 78% delithiated state accounted for 62% of total Mo content. As shown in FIG. 2, the doping element Mo was in uniform doping in a bulk structure of particles in the positive electrode active material.

Preparation of an electrolyte

EC, DEC, and DMC were mixed at a volume ratio of 1:1:1 to obtain a solvent. Then a lithium salt $LiPF_6$ was dissolved in the solvent to obtain an electrolyte, where a concentration of $LiPF_6$ was 1 mol/L.

Preparation of a button battery

The prepared positive electrode active material, conductive carbon black, and a binder PVDF were dispersed in a solvent N-methylpyrrolidone (NMP) at a weight ratio of 90:5:5, and were well mixed to obtain a positive electrode slurry.

The positive electrode slurry was evenly applied to a positive electrode current collector aluminum foil, followed by drying and cold pressing, to obtain a positive electrode plate. In a button battery box, the positive electrode plate, a separator, and a lithium metal plate were stacked in sequence, and the electrolyte was injected, to obtain a button battery through assembly.

Preparation of a full battery

The prepared positive electrode active material, a conductive agent acetylene black, and a binder PVDF were dispersed in a solvent NMP at a weight ratio of 94:3:3, and were well mixed to obtain a positive electrode slurry. The positive electrode slurry was evenly applied to a positive electrode current collector aluminum foil, followed by drying and cold pressing, to obtain a positive electrode plate.

A negative electrode active material artificial graphite, hard carbon, a conductive agent acetylene black, a binder styrene-butadiene rubber (SBR), and a thickener sodium carboxymethyl cellulose (CMC-Na) were dispersed in deionized water at a weight ratio of 90:5:2:2:1, and were well mixed to obtain a negative electrode slurry. The negative electrode slurry was evenly applied to a negative electrode current collector aluminum foil, followed by drying and cold pressing, to obtain a negative electrode plate.

A polyethylene (PE) porous polymer film was used as a separator. The positive electrode plate, the separator, and the negative electrode plate were stacked in sequence to obtain a bare cell. The bare cell was placed in an outer package, the electrolyte was injected, and the bare cell was packaged. Then processes such as formation were performed to obtain a full battery.

**Examples 2 to 27 and Comparative Examples 1 to 9**

A difference from Example 1 lies in that related parameters in the preparation steps of the positive electrode active material were modified to obtain a positive electrode active material with a predetermined doping element type, doping amount, and doping uniformity. For details, refer to Table 1.

Comparative Examples 3 to 5 and Examples 2 and 3 differ from Example 1 in that $MoO_3$ added in a sintering step accounted for 10%, 20%, 80%, 50%, and 70% of total mass of $MoO_2$ and MoOs, respectively.

In Comparative Example 1, no doping element was added.

In Comparative Example 2, a doping element source was $Y_2O_3$.

In Examples 4 to 8 and Examples 19 to 25, in a sintering step, a common oxide containing elements with a valence greater than +3 and a corresponding low-valence oxide were selected as doping element sources, where doping element sources with a valence greater than +3 accounted for 50% of total mass of doping element sources.

In Examples 9 to 15, $Sb_2O_5$ added during sintering accounted for 60% of total mass of $Sb_2O_3$ and $Sb_2O_5$, and a total doping amount was controlled to obtain positive electrode active materials with different true doping concentrations.

In Examples 16 to 18, $WO_3$ added during sintering accounted for 40% of total mass of $WO_2$ and $WO_3$.

In Comparative Example 6, a positive electrode active material precursor $[Ni_{0.6}Co_{0.2}Mn_{0.2}](OH)_2$ was used, and no doping element was added.

In Comparative Example 7, a positive electrode active material precursor $[Ni_{0.6}Co_{0.2}Mn_{0.2}](OH)_2$ was used, and a doping element source was $Y_2O_3$.

In Comparative Examples 8 and 9 and Example 26, a positive electrode active material precursor $[Ni_{0.6}Co_{0.2}Mn_{0.2}](OH)_2$ was used, and $Sb_2O_5$ added during sintering accounted for 10%, 90%, and 50% of total mass of $Sb_2O_3$ and $Sb_2O_5$, respectively.

In Example 27, a positive electrode active material precursor $[Ni_{0.6}Co_{0.2}Mn_{0.2}](OH)_2$ was used, and $WO_3$ added during sintering accounted for 50% of total mass of $WO_2$ and $WO_3$.

A relative deviation $\sigma$ of a local mass concentration of a doping element in a particle of the positive electrode active material, and a deviation $\varepsilon$ of a mass concentration of a doping element in the positive electrode active material from an average mass concentration of the doping element in the particle of the positive electrode active material may be adjusted by adjusting the doping element type, the doping amount, the sintering temperature, the sintering duration, and the like.

Test

1. Valence distribution test for a doping element in a positive electrode active material in a "78% delithiated state"

a. Determining the 78% delithiated state

At 25°C, eight button batteries were separately charged to an upper limit of a cut-off charge/discharge voltage at a constant current of 1C, then charged to a current less than or equal to 0.05 mA at a constant voltage, then left aside for 2 minutes, and then discharged to a lower limit of the cut-off charge/discharge voltage at a constant current of 1C.

Then the eight charged and discharged button batteries were charged to 4.0 V, 4.1 V, 4.2 V, 4.3 V, 4.4 V, 4.5 V, 4.6 V, and 4.7 V at a rate of 0.1C, respectively. Each charged button battery was taken, and a positive electrode plate was taken as a sample in a drying room. The sample was weighed, mass was recorded, and the sample was put into a digestion tank. 10 mL of aqua regia was slowly added as a digestion reagent. The sample was assembled and put into a CEM-Mars5 microwave digestion instrument, and digestion performed at a microwave emission frequency of 2450 Hz. A digested sample solution was transferred to a volumetric flask for a good shaking. A sample was taken and put into a sample feeding system of a 7000DV inductively coupled plasma-optical emission spectrometer (ICP-OES) of PE (US). Mass concentrations of Li, O, Ni, Co, Mn, and the doping element in the positive electrode active material were tested under an argon pressure of 0.6 MPa and a radio frequency power of 1300 W. A chemical formula under each voltage was obtained through conversion based on a mass concentration of each element, and then a delithiated state under each voltage was obtained. If a chemical formula of the positive electrode active material obtained through conversion at a voltage of 4.3 V was $Li_{0.22}Ni_{0.8}Co_{0.1}Mn_{0.1}O_2$, a corresponding delithiated state was $(1 - 0.22) \times 100\% = 78\%$ delithiated state, that is, the 78% delithiated state corresponded to a battery voltage of 4.3 V

The button battery was charged to the voltage corresponding to the 78% delithiated state at 25°C and at a rate of 0.1C, to obtain a sample in the 78% delithiated state. Then the following operations were performed.

b. Testing an element valence state through XPS

(1) The battery cell in the 78% delithiated state was disassembled in the drying room. The entire positive electrode plate was taken and put into a beaker. An appropriate amount of high-purity anhydrous dimethyl carbonate DMC was added, and the DMC was replaced every 8 hours. The positive electrode plate was cleaned for consecutive three times, then put into a vacuum standing box in the drying room, and dried for 12 hours in a vacuum state (-0.096 MPa). Powder was scraped from the dried positive electrode plate by using a blade in the drying room, and ground, and approximately 50 mg of positive electrode active material powder was weighed.

(2) A surface of an aluminum foil of approximately 2 cm $\times$ 2 cm was cleaned with acetone. A double-sided tape of approximately 1 cm $\times$ 1 cm was cut and attached to a center location of the aluminum foil. The powder sample was spread on the double-sided tape, and the powder was evenly spread on the entire tape by using a clean stainless steel sampling spoon. Another aluminum foil cleaned with acetone was taken to cover the sample, and the whole piece was placed between two flat stainless steel modules. Then a tablet press was used for compressing. A pressure of approximately 10 MPa was applied, and was hold for 15 seconds.

(3) An escalab 250Xi X-ray photoelectron spectrometer of Thermo Fisher Scientific (Thermo) (US) was used. The pressed sample was put into a sample cavity. A monochromatic Al K$\alpha$ (hv = 1486.6 eV) excitation source was set, an X-ray power was set to 150 W, and a focus spot was set to 500 $\mu$m. A2p or 3d spectrum of the doping element was collected, and peak differentiating was performed by using XPSpeak software, to determine a valence distribution of the doping element.

2. DSC test for the positive electrode active material in a fully charged state

4.95 mg to 5.05 mg of positive electrode active material powder in the "78% delithiated state" was taken and put into a high-pressure crucible of a STA449F3-QMS403C thermal-mass spectrometry system for sealing. The sample was heated at a heating rate of 10°C /min, and heat flow changes of the sample along with temperature changes were recorded, to obtain a DSC spectrogram, and also obtain an onset exothermic temperature, a peak width at half height, an integral area, and a maximum exothermic temperature of a main exothermic peak.

3. Testing a relative deviation of a local mass concentration of a doping element in a particle of the positive electrode active material

2g of a positive electrode active material powder sample was weighed, and the sample was evenly sprinkled on a sample stage with conductive adhesive, and then the powder was lightly pressed to fix it. Alternatively, an electrode plate of 1 cm $\times$ 1 cm was cut from the positive electrode plate of the battery and pasted to the sample stage as a to-be-tested sample. The sample stage was put into a vacuum sample chamber and properly fixed. An IB-09010CP cross-section polisher of Japan Electron Optics Laboratory (JEOL) was used to prepare a cross section of a particle in the positive electrode active material (as shown in FIG. 3). Points were taken with reference to 17 locations in the cross section of the particle shown in FIG. 3, and an area of each point is 20 nm $\times$ 20 nm. An X-Max energy dispersive spectroscopy (EDS) of Oxford Instruments (UK) and a Sigma-02-33 scanning electron microscope (SEM) of ZEISS (Germany) were used together to test mass concentrations of doping element at the 17 locations. A test method was as follows: Li, O, Ni, Co, Mn, and the doping element were selected as to-be-tested elements. SEM parameters were set as follows: An accelerating voltage was 20 kV, an aperture was 60 $\mu$m, an operating distance was 8.5 mm, and a current was 2.335 A. When an EDS test was performed, the test did not stop until a spectrogram area reached 250,000 cts or above (controlled by collection duration and a collection rate), and data was collected to obtain mass concentrations of the doping element at all locations, which were denoted as $\eta_1$, $\eta_2$, $\eta_3$, ..., and $\eta_{17}$.

Method for testing an average mass concentration $\bar{\eta}$ of the doping element in a particle of the positive electrode active material: The foregoing EDS-SEM test method was used. As indicated by a dashed-line box in FIG. 3, a test area covered all points of spot scanning for the particle of the positive electrode active material, and did not go beyond a cross section of the secondary particle.

Then the relative deviation $\sigma$ of the local mass concentration of the doping element in the particle of the positive electrode active material was calculated based on the formula (1).

To test a positive electrode active material in a battery, the battery might be disassembled in a drying room. A middle part of a positive electrode plate was taken and put into a beaker. An appropriate amount of high-purity anhydrous dimethyl carbonate DMC was added, and the DMC was replaced every 8 hours. The middle part was cleaned for consecutive three times, then put into a vacuum standing box in the drying room, and dried for 12 hours in a vacuum state (-0.096 MPa). After drying, an electrode plate sample with a size of 1 cm $\times$ 1 cm or above was cut, and the electrode plate sample was pasted to a sample stage with conductive adhesive; or 2g of positive electrode active material powder was taken through scraping in the drying room as a to-be-tested sample, and a test was performed according to the foregoing method.

4. Testing a true doping concentration of the positive electrode active material

A TD2400 powder true density tester of Beijing Builder Electronic Technology Co., Ltd. was used to test true density $\rho_{true}$ of the positive electrode active material. A test method was as follows: At 25°C, a positive electrode active material with specific mass was taken and put into a sample cup, and the mass m of the positive electrode active material was recorded. The sample cup containing the positive electrode active material was put into a test chamber of the true density tester, the test system was sealed, and an inert gas with a small molecular diameter such as helium or nitrogen was introduced. Gas pressures in the sample chamber and a swelling chamber were measured. Then a true volume V of the tested material was measured according to the Bohr's theory PV = nRT, and true density $\rho_{true}$ of a secondary particle was calculated by using m/V. n was molar mass of a gas in the sample cup. R was an ideal gas constant, which was 8.314. T was an ambient temperature, which was 298.15 K.

A 7000DV inductively coupled plasma-optical emission spectrometer (ICP-OES) of PE (US) was used to test a mass concentration $\varphi$ of a doping element in the positive electrode active material. A test method was as follows: An electrode plate containing the positive electrode active material was taken and punched into a wafer whose total mass was greater than 0.5 g, or at least 5g of a positive electrode active material powder sample was taken. The sample was weighed, and mass of the sample was recorded. Then the sample was put into a digestion tank, and 10 mL of aqua regia was slowly added as a digestion reagent. Then the sample was put into a Mars5 microwave digestion instrument of CEM (US), and digested at a microwave emission frequency of 2450 Hz. A digested sample solution was transferred to a volumetric flask for a good shaking. A sample was taken and put into a sample feeding system of an ICP-OES. The mass concentration of the doping element in the positive electrode active material was tested under an argon pressure of 0.6 MPa and a radio frequency power of 1300 W.

Then the true doping concentration $\omega$ of the positive electrode active material was calculated by using the formula (2).

5. Testing an initial gram capacity of a button battery

At 25°C, the battery was charged to an upper limit of a cut-off charge/discharge voltage at a constant current of 0.1C, then charged to a current less than or equal to 0.05 mA at a constant voltage, then left aside for 2 minutes, and then discharged to a lower limit of the cut-off charge/discharge voltage at a constant current of 0.1C. A discharge capacity in this case was the initial gram capacity of the button battery.

6. Testing an initial gram capacity of a full battery

At 25°C, the battery was charged to an upper limit of a cut-off charge/discharge voltage at a constant current of 1/3C, then charged to a current less than or equal to 0.05 mA at a constant voltage, then left aside for 5 minutes, and then discharged to a lower limit of the cut-off charge/discharge voltage at a constant current of 1/3C. A discharge capacity in this case was the initial gram capacity of the full battery.

7. Testing high-temperature cycling performance of a full battery

At 45°C, the battery was charged to an upper limit of a cut-off charge/discharge voltage at a constant current of 1C, then charged to a current less than or equal to 0.05 mA at a constant voltage, then left aside for 5 minutes, and then discharged to a lower limit of the cut-off charge/discharge voltage at a constant current of 1C. This was a charge and discharge cycle, and a discharge capacity in this case was recorded as a discharge specific capacity $D_1$ in the first cycle. 400 charge and discharge cycles were performed on the battery according to the foregoing method, and a discharge specific capacity $D_{400}$ in the 400th cycle was recorded.

Capacity retention rate (%) of the full battery at 1C/1C in the 400th cycle at 45°C = $D_{400}/D_1 \times 100\%$

In tests 1, 5, 6, and 7:

in Examples 1 to 25 and Comparative Examples 1 to 5, the cut-off charge/discharge voltage of the button battery was 2.8 V to 4.25 V, and the cut-off charge/discharge voltage of the full battery was 2.8 V to 4.2 V; and
in Examples 26 and 27 and Comparative Examples 6 to 9, the cut-off charge/discharge voltage of the button battery was 2.8 V to 4.35 V, and the cut-off charge/discharge voltage of the full battery was 2.8 V to 4.3 V

Test results of examples and comparative examples are shown in Table 1 to Table 4.

**Table 1**

| No. | Doping element | | | | $\omega$ ($\mu$g/cm$^3$) | $\sigma$ (%) | $\varepsilon$ (%) |
| --- | --- | --- | --- | --- | --- | --- | --- |
| | Type | Lowest valence state | Highest valence state | Highest-valence percentage (%) | | | |
| Comparative Example 1 | / | / | / | / | / | / | / |
| Comparative Example 2 | Y | +3 | +3 | 100 | 25120 | 9 | 10 |
| Comparative Example 3 | Mo | +3 | +6 | 29 | 25020 | 12 | 11 |
| Comparative Example 4 | Mo | +3 | +6 | 38 | 25010 | 10 | 9 |
| Comparative Example 5 | Mo | +3 | +6 | 96 | 24510 | 9 | 12 |
| Example 1 | Mo | +3 | +6 | 62 | 24920 | 11 | 10 |
| Example 2 | Mo | +3 | +6 | 71 | 25100 | 9 | 11 |
| Example 3 | Mo | +3 | +6 | 90 | 25190 | 10 | 8 |
| Example 4 | Sb | +3 | +5 | 68 | 25110 | 11 | 12 |
| Example 5 | Te | +4 | +6 | 73 | 25490 | 8 | 9 |
| Example 6 | Ce | +3 | +4 | 72 | 25410 | 13 | 10 |
| Example 7 | Mo+W | +3 | +6 | 69 | 25200 | 9 | 10 |
| Example 8 | Sb+Ru+Te | +3 | +8 | 71 | 25480 | 10 | 11 |
| Example 9 | Sb | +3 | +5 | 82 | 1510 | 6 | 10 |
| Example 10 | Sb | +3 | +5 | 78 | 2290 | 11 | 9 |
| Example 11 | Sb | +3 | +5 | 79 | 14810 | 13 | 12 |
| Example 12 | Sb | +3 | +5 | 81 | 25170 | 9 | 10 |
| Example 13 | Sb | +3 | +5 | 80 | 36720 | 16 | 13 |
| Example 14 | Sb | +3 | +5 | 81 | 49110 | 8 | 11 |
| Example 15 | Sb | +3 | +5 | 77 | 58030 | 7 | 9 |
| Example 16 | W | +3 | +6 | 60 | 25390 | 8 | 12 |
| Example 17 | W | +3 | +6 | 58 | 25310 | 20 | 13 |
| Example 18 | W | +3 | +6 | 62 | 25520 | 32 | 15 |

(continued)

| No. | Doping element | | | | ω (μg/cm³) | σ (%) | ε (%) |
| | Type | Lowest valence state | Highest valence state | Highest-valence percentage (%) | | | |
|---|---|---|---|---|---|---|---|
| Example 19 | Pd | +2 | +4 | 75 | 25090 | 11 | 11 |
| Example 20 | Rh | +3 | +5 | 73 | 25300 | 13 | 10 |
| Example 21 | Ce | +3 | +4 | 77 | 25200 | 9 | 12 |
| Example 22 | Nb | +3 | +5 | 76 | 25310 | 10 | 9 |
| Example 23 | Se | +4 | +6 | 75 | 25380 | 11 | 10 |
| Example 24 | Sb | +3 | +5 | 73 | 25230 | 12 | 31 |
| Example 25 | Sb | +3 | +5 | 74 | 25210 | 16 | 49 |
| Comparative Example 6 | / | / | / | / | / | / | / |
| Comparative Example 7 | Y | +3 | +3 | 100 | 25290 | 10 | 11 |
| Comparative Example 8 | Sb | +3 | +5 | 28 | 25030 | 9 | 10 |
| Comparative Example 9 | Sb | +3 | +5 | 99 | 25190 | 10 | 12 |
| Example 26 | Sb | +3 | +5 | 71 | 25120 | 13 | 9 |
| Example 27 | W | +3 | +6 | 69 | 24890 | 8 | 10 |

In Table 1, the "lowest valence state" is a smallest value in valence distribution of a doping element in a positive electrode active material in a "78% delithiated state"; the "highest valence state" is a largest value in the valence distribution of the doping element in the positive electrode active material in the "78% delithiated state"; and the "highest-valence percentage" is a percentage of the amount of doping element in a highest valence state in the positive electrode active material in the "78% delithiated state" in the total amount of doping element.

**Table 2**

| | Onset exothermic temperature (°C) | Peak width at half height (°C) | Exothermic integral area (J/g) | Maximum exothermic temperature (°C) | Initial gram capacity of button battery (mAh/ g) | Initial gram capacity of full battery (mAh/ g) | Capacity retention rate of full battery (%) |
|---|---|---|---|---|---|---|---|
| Example 1 | 210 | 20 | 98 | 230 | 203.9 | 195.1 | 91.48 |
| Example 2 | 213 | 21 | 52 | 234 | 207.1 | 196.4 | 93.61 |
| Example 3 | 212 | 19 | 88 | 231 | 202.4 | 196.8 | 92.34 |
| Comparative Example 1 | 184 | 36 | 137 | 219 | 196.9 | 186.3 | 80.97 |
| Comparative Example 2 | 196 | 30 | 113 | 226 | 200.8 | 191.3 | 83.76 |
| Comparative Example 3 | 208 | 19 | 118 | 227 | 201.9 | 191.9 | 84.99 |
| Comparative Example 4 | 210 | 19 | 109 | 229 | 202.4 | 193.5 | 89.87 |

(continued)

| | Onset exothermic temperature (°C) | Peak width at half height (°C) | Exothermic integral area (J/g) | Maximum exothermic temperature (°C) | Initial gram capacity of button battery (mAh/g) | Initial gram capacity of full battery (mAh/g) | Capacity retention rate of full battery (%) |
|---|---|---|---|---|---|---|---|
| Comparative Example 5 | 210 | 19 | 96 | 229 | 201.2 | 192.5 | 88.96 |
| Example 26 | 226 | 21 | 43 | 247 | 184.6 | 180.2 | 95.38 |
| Comparative Example 6 | 204 | 36 | 113 | 238 | 172.5 | 168.4 | 86.21 |
| Comparative Example 7 | 207 | 32 | 106 | 238 | 179.5 | 174.6 | 87.93 |
| Comparative Example 8 | 211 | 33 | 67 | 243 | 177.2 | 173.5 | 90.34 |
| Comparative Example 9 | 213 | 35 | 84 | 242 | 178.3 | 174.3 | 89.67 |

From the results of Examples 1 to 3 and Comparative Examples 1 to 5 and the results of Example 26 and Comparative Examples 6 to 9, it can be learned that the positive electrode active material included a lithium nickel cobalt manganese oxide, in the lithium nickel cobalt manganese oxide, the number of moles of nickel accounted for 50% to 95% of the total number of moles of nickel, cobalt, and manganese, a polyvalent element was included in doping in a transition metal layer, the doping element in the positive electrode active material in the 78% delithiated state had two or more different valence states, and the amount of doping element in a highest valence state accounted for 40% to 90% of the total amount of doping element, so that the lithium-ion secondary battery not only had a relatively high initial capacity, but also had relatively good high-temperature cycling performance.

## Table 3

| | Onset exothermic temperature (°C) | Peak width at half height (°C) | Exothermic integral area (J/g) | Maximum exothermic temperature (°C) | Initial gram capacity of button battery (mAh/g) | Initial gram capacity of full battery (mAh/g) | Capacity retention rate of full battery (%) |
|---|---|---|---|---|---|---|---|
| Example 2 | 213 | 21 | 52 | 234 | 207.1 | 196.4 | 93.61 |
| Example 4 | 213 | 22 | 51 | 234 | 207.9 | 197.2 | 94.31 |
| Example 5 | 207 | 25 | 74 | 233 | 205.7 | 194.4 | 91.38 |
| Example 6 | 208 | 27 | 81 | 234 | 206.5 | 195.6 | 91.42 |
| Example 7 | 213 | 19 | 43 | 231 | 207.9 | 196.7 | 94.65 |
| Example 8 | 217 | 22 | 47 | 240 | 206.9 | 196.3 | 92.23 |
| Example 19 | 206 | 26 | 57 | 232 | 203.5 | 194.5 | 89.61 |
| Example 20 | 208 | 25 | 51 | 234 | 205.5 | 196.7 | 91.31 |
| Example 21 | 210 | 27 | 52 | 237 | 203.8 | 197.8 | 91.05 |
| Example 22 | 211 | 25 | 46 | 236 | 206.3 | 197.6 | 92.89 |
| Example 23 | 213 | 25 | 44 | 238 | 206.8 | 198.5 | 93.28 |

| | Onset exothermic temperature (°C) | Peak width at half height (°C) | Exothermic integral area (J/g) | Maximum exothermic temperature (°C) | Initial gram capacity of button battery (mAh/g) | Initial gram capacity of full battery (mAh/g) | Capacity retention rate of full battery (%) |
|---|---|---|---|---|---|---|---|
| Example 26 | 226 | 21 | 43 | 247 | 184.6 | 180.2 | 95.38 |
| Example 27 | 225 | 26 | 51 | 251 | 183.7 | 179.3 | 94.75 |

From the results of Examples 2, 4 to 8, and 19 to 23 and the results of Examples 26 and 27, it can be learned that selecting a better doping element type could better improve an initial capacity and high-temperature cycling performance

of the battery.

## Table 4

| | Onset exothermic temperature (°C) | Peak width at half height (°C) | Exothermic integral area (J/g) | Maximum exothermic temperature (°C) | Initial gram capacity of button battery (mAh/g) | Initial gram capacity of full battery (mAh/g) | Capacity retention rate of full battery (%) |
|---|---|---|---|---|---|---|---|
| Example 9 | 196 | 31 | 105 | 227 | 201.4 | 191.2 | 84.77 |
| Example 10 | 201 | 29 | 77 | 231 | 202.3 | 192.6 | 85.33 |
| Example 11 | 205 | 28 | 53 | 232 | 206.7 | 195.4 | 91.94 |
| Example 12 | 211 | 23 | 52 | 234 | 207.3 | 196.8 | 93.23 |
| Example 13 | 208 | 23 | 54 | 231 | 205.7 | 196.2 | 92.14 |
| Example 14 | 209 | 25 | 85 | 234 | 204.1 | 194 | 90.11 |
| Example 15 | 199 | 33 | 113 | 232 | 202.3 | 191.6 | 85.62 |

From the results of Examples 9 to 15, it can be learned that controlling the true doping concentration ω of the positive electrode active material in an appropriate range helped improve an initial capacity and high-temperature cycling performance of the battery.

## Table 5

| | Onset exothermic temperature (°C) | Peak width at half height (°C) | Exothermic integral area (J/g) | Maximum exothermic temperature (°C) | Initial gram capacity of button battery (mAh/g) | Initial gram capacity of full battery (mAh/g) | Capacity retention rate of full battery (%) |
|---|---|---|---|---|---|---|---|
| Example 16 | 207 | 25 | 67 | 233 | 206.5 | 195.8 | 91.93 |
| Example 17 | 200 | 28 | 104 | 228 | 201.4 | 192.4 | 85.85 |
| Example 18 | 194 | 32 | 123 | 226 | 198.5 | 191.3 | 84.91 |

From the results of Examples 16 to 18, it can be learned that controlling the relative deviation σ of the local mass concentration of the doping element in the particle of the positive electrode active material to be 20% or below, especially below 20%, could better improve an initial capacity and high-temperature cycling performance of the battery.

**Table 6**

| | Onset exothermic temperature (°C) | Peak width at half height (°C) | Exothermic integral area (J/g) | Maximum exothermic temperature (°C) | Initial gram capacity of button battery (mAh/g) | Initial gram capacity of full battery (mAh/g) | Capacity retention rate of full battery (%) |
|---|---|---|---|---|---|---|---|
| Example 4 | 213 | 22 | 51 | 234 | 207.9 | 197.2 | 94.31 |
| Example 24 | 204 | 71 | 27 | 231 | 204.5 | 195.6 | 91.82 |
| Example 25 | 197 | 104 | 35 | 224 | 203.1 | 193.2 | 89.28 |

From the results of Examples 4, 24, and 25, it can be learned that, when ε was relatively small, it indicated that doping element could be successfully distributed into particles of the positive electrode active material, so that the doping element fully played a role in improving structural stability of the positive electrode material, thereby improving thermal stability of the positive electrode material while improving a capacity and high-temperature cycling performance of the battery. When ε was too large, a relatively large quantity of doping element was distributed in gaps between or on surfaces of particles in the positive electrode active material, the doping element had a poor improvement effect on the positive electrode active material, and thermal stability of the positive electrode active material was relatively poor. However, doping element distributed on the surfaces played a coating effect, and could isolate an electrolyte and reduce side reactions. Therefore, in this case, a capacity and high-temperature cycling performance of a battery cell were slightly degraded.

The foregoing descriptions are merely embodiments of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

**Claims**

1. A positive electrode active material, comprising a lithium nickel cobalt manganese oxide, wherein in the lithium nickel cobalt manganese oxide, the number of moles of nickel accounts for 50% to 95% of the total number of moles of nickel, cobalt, and manganese, and the lithium nickel cobalt manganese oxide has a layered crystal structure with a space group R$\bar{3}$m; and

the lithium nickel cobalt manganese oxide comprises a doping element, and when the positive electrode active material is in a 78% delithiated state, the doping element has two or more different valence states, and the amount of doping element in a highest valence state accounts for 40% to 90% of the total amount of doping element.

2. The positive electrode active material according to claim 1, wherein when the positive electrode active material is in the 78% delithiated state, the amount of doping element in the highest valence state accounts for 50% to 90%, optionally, 60% to 80%, of the total amount of doping element.

3. The positive electrode active material according to claim 1 or 2, wherein when the positive electrode active material is in the 78% delithiated state, one part of the doping element has one or more valences of +2, +3, and +4, and the other part of the doping element has one or more valences of +4, +5, +6, +7, and +8.

4. The positive electrode active material according to any one of claims 1 to 3, wherein the doping element comprises one or more polyvalent elements of Ti, V, Cr, Se, Nb, Mo, Ru, Rh, Pd, Sb, Te, Ce, and W; optionally, the doping element comprises one or more of Se, Nb, Mo, Ru, Rh, Sb, Te, Ce and W; and optionally, the doping element comprises one or more of Se, Nb, Mo, Sb, and W.

5. The positive electrode active material according to any one of claims 1 to 4, wherein a relative deviation of a local mass concentration of the doping element in a particle of the positive electrode active material is 20% or below.

6. The positive electrode active material according to any one of claims 1 to 5, wherein a true doping concentration $\omega$ of the positive electrode active material satisfies $2300\ \mu g/cm^3 \leq \omega \leq 50000\ \mu g/cm^3$, optionally, $3000\ \mu g/cm^3 \leq \omega \leq 40000\ \mu g/cm^3$, and optionally, $14810\ \mu g/cm^3 \leq \omega \leq 36720\ \mu g/cm^3$.

7. The positive electrode active material according to any one of claims 1 to 6, wherein a deviation $\varepsilon$ of a mass concentration of the doping element in the positive electrode active material relative to an average mass concentration of the doping element in a particle of the positive electrode active material is 30% or below, optionally, 20% or below.

8. The positive electrode active material according to any one of claims 1 to 7, wherein in differential scanning calorimetry analysis with the positive electrode active material in the 78% delithiated state, an onset exothermic temperature of a main exothermic peak is 200°C or above, and an integral area of the main exothermic peak is 100 J/g or below; and optionally, a peak width at half height of the main exothermic peak is 30°C or below, or a maximum exothermic temperature of the main exothermic peak is 230°C or above.

9. The positive electrode active material according to any one of claims 1 to 8, wherein true density $\rho_{true}$ of the positive electrode active material satisfies $4.6\ g/cm^3 \leq \rho_{true} \leq 4.9\ g/cm^3$.

10. The positive electrode active material according to any one of claims 1 to 9, wherein the positive electrode active material further satisfies one or more of the following (1) to (4):

    (1) a volume average particle size $D_v50$ of the positive electrode active material is 5 $\mu$m to 20 $\mu$m, optionally, 8 $\mu$m to 15 $\mu$m, and further optionally, 9 $\mu$m to 11 $\mu$m;
    (2) a specific surface area of the positive electrode active material is 0.2 m$^2$/g to 1.5 m$^2$/g, optionally, 0.3 m$^2$/g to 1 m$^2$/g;
    (3) tap density of the positive electrode active material is 2.3 g/cm$^3$ to 2.8 g/cm$^3$; and
    (4) compacted density of the positive electrode active material under a pressure of 5 tons (equivalent to 49 kN) is 3.1 g/cm$^3$ to 3.8 g/cm$^3$.

11. The positive electrode active material according to any one of claims 1 to 10, wherein

    the lithium nickel cobalt manganese oxide satisfies a chemical formula $Li_{1+a}[Ni_xCo_yMn_zM^1{}_b]O_{2-p}X_p$, wherein M$^1$ is the doping element, M$^1$ is selected from one or more polyvalent elements of Ti, V, Cr, Se, Nb, Mo, Ru, Rh, Pd, Sb, Te, Ce and W, X is selected from one or more of F, N, P and S, $0.7 \leq x \leq 0.9$, $0 < y < 0.3$, $0 < z < 0.3$, $-0.1 \leq a < 0.2$, $0 < b < 0.3$, $x + y + z + b = 1$, and $0 \leq p < 0.2$; or
    the lithium nickel cobalt manganese oxide satisfies a chemical formula $Li_{1+c}[Ni_{r-d}Co_sMn_tM^2{}_d]O_{2-q}X'_q$, wherein M$^2$ is the doping element, M$^2$ is selected from one or more polyvalent elements of Ti, V, Cr, Se, Nb, Mo, Ru, Rh, Pd, Sb, Te, Ce and W, X' is selected from one or more of F, N, P and S, $0.7 \leq r - d \leq 0.9$, $0 < s < 0.3$, $0 < t < 0.3$, $-0.1 \leq c < 0.2$, $0 < d < 0.3$, $r + s + t = 1$, and $0 \leq q < 0.2$.

12. A lithium-ion secondary battery (5), comprising a positive electrode plate, the positive electrode plate comprising a positive electrode current collector and a positive electrode active material layer disposed on the positive electrode current collector, wherein the positive electrode active material layer comprises the positive electrode active material according to any one of claims 1 to 11.

13. A battery module (4), comprising the lithium-ion secondary battery (5) according to claim 12.

14. A battery pack (1), comprising the lithium-ion secondary battery (5) according to claim 12 or the battery module (4) according to claim 13.

15. An apparatus, comprising at least one of the lithium-ion secondary battery (5) according to claim 12, the battery module (4) according to claim 13, or the battery pack (1) according to claim 14.

## DSC spectrogram of powder

FIG. 1

## Element distribution CP graph

Example 1

10μm

FIG. 2

FIG. 3

**5**

FIG. 4

FIG. 5

FIG. 6

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910824291